(19) **Europäisches Patentamt / European Patent Office / Office européen des brevets**

(11) **EP 4 016 058 B1**

(12) **EUROPEAN PATENT SPECIFICATION**

(45) Date of publication and mention of the grant of the patent:
**15.11.2023 Bulletin 2023/46**

(21) Application number: **21214212.9**

(22) Date of filing: **14.12.2021**

(51) International Patent Classification (IPC):
**G06T 7/00** *(2017.01)* **G06T 7/136** *(2017.01)*
**G06T 7/521** *(2017.01)* **G01N 21/88** *(2006.01)*
**G01N 21/89** *(2006.01)* **B61K 9/10** *(2006.01)*
**G01N 21/95** *(2006.01)*

(52) Cooperative Patent Classification (CPC):
**G01N 21/9515; B61K 9/10; G01N 21/8806;**
**G01N 21/8851; G01N 21/89; G06T 7/0008;**
**G06T 7/136; G06T 7/521;** G01N 2021/8816;
G01N 2021/8835; G01N 2021/8838;
G01N 2021/8918; G06T 2207/10152;
G06T 2207/20076; G06T 2207/20084;    (Cont.)

(54) **AUTOMATIC MACHINE OF VISION ON DETECTION DEVICE FOR WORKPIECE WITH COMPLEX CURVED SURFACE**

AUTOMATISCHE SICHTMASCHINE AUF EINER ERKENNUNGSVORRICHTUNG FÜR WERKSTÜCKE MIT KOMPLEXER GEKRÜMMTER OBERFLÄCHE

MACHINE AUTOMATIQUE DE VISION SUR UN DISPOSITIF DE DÉTECTION POUR PIÈCE À SURFACE COURBE COMPLEXE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 16.12.2020  CN 202011490539
23.04.2021  CN 202110443618

(43) Date of publication of application:
**22.06.2022 Bulletin 2022/25**

(73) Proprietor: **Zhejiang University**
**Hangzhou, Zhejiang 310058 (CN)**

(72) Inventors:
- **Cao, Yanlong**
  **HangZhou (CN)**
- **Liu, Wenyuan**
  **HangZhou (CN)**
- **Chen, Jingxi**
  **HangZhou (CN)**
- **Ding, Binjie**
  **HangZhou (CN)**
- **Ge, Hao**
  **HangZhou (CN)**
- **Huang, Fang**
  **HangZhou (CN)**
- **Yu, Mingzhou**
  **HangZhou (CN)**
- **Yu, Jialiang**
  **HangZhou (CN)**
- **Wei, Xiaoyao**
  **HangZhou (CN)**
- **Wang, Jing**
  **HangZhou (CN)**
- **Yang, Jiangxin**
  **HangZhou (CN)**
- **Cao, Yanpeng**
  **HangZhou (CN)**

(74) Representative: **Huang, Liwei**
**Cäcilienstraße 12**
**40597 Düsseldorf (DE)**

(56) References cited:
WO-A1-94/14053       WO-A1-2006/128317
CN-A- 102 507 587    CN-A- 104 778 749
CN-A- 110 919 500    CN-A- 111 122 598

EP 4 016 058 B1

(52) Cooperative Patent Classification (CPC): (Cont.)
G06T 2207/20221; G06T 2207/30136;
G06T 2207/30164

## Description

### TEHCNICAL FIELD

The present invention belongs to the technical field of machine vision detection, and particularly relates to an automatic machine of vision detection device for a workpiece with a complex curved surface.

### BACKGROUND

Machine vision detection technology uses image capture devices instead of human eyes to conduct measurement and judgment on targets, and has been widely used in industrial fields. A typical machine vision system includes three parts: lighting, lens and camera. In conventional machine vision detection, there is no universal machine vision lighting equipment. Therefore, a corresponding lighting device should be selected for each specific application example, to achieve the best shooting effect. Moreover, for defect detection, different lighting (polishing) solutions can present different types of defects. On the production line, it is impossible for a single lighting (polishing) solution to show all types of defects from time to time, and the missed detection rate is high, especially for components with complex curved surfaces, a single lighting solution cannot be applied, for example, I-beam steel rails, hood housing with multiple punching slopes, etc.

Taking steel rails as an example, the steel rails produced by steel mills has a standard length of 25 meters or 100 meters. After the steel rails with a standard length are transported to a rail welding base, the rails are welded and connected to a 500-meter-long seamless rail, and then transported to the railway line for laying. When laying the railway line on the site, 500 meters of rails are welded in sequence to a 500-meter-long rail, then welded in sequence to form a whole-line seamless rail. There should be no mechanical connection slits at any position of the rail, and the train can run smoothly. When the rail is welded at the welded rail base, a weld joint is formed at the weld of every two rails. When the thickness of the weld joint is higher than the surface of the rail and an overlap that protruding from the rail surface is formed, the overlap must be polished, to form a smooth weld joint, so that the weld joint and the steel rails on the left and right of the weld joint can reach a smooth transition that meets the industrial standard and qualified weld joints can be formed, to guarantee the smooth and safe operation of the train.

The existing rail surface quality detection method is non-detection, or observed by human eyes or a depth measurement on the rail surface is conducted on two or more points on the surface of the trail by using a micrometer, and there is no mechanized and automated detection scheme available. Manual detection cannot achieve the detection on the pits and cracks on the surface of the rail base material, nor detection on the grinding marks and grinding quality of the rail weld joint after grinding or accurate measurement on the machining allowance at the rail weld joints.

Taking a hood housing as an example, the commonly used 2D machine vision detection system adopts a bar-shaped light source to illuminate, which cannot fully present the indentation, scratches, pits and other defects on the inclined surface. In addition, the housing is formed by stainless steel punching, which has serious interference from high light, so the detection rate and the accuracy of defects are low.

Some other prior arts can be seen in e.g. WO2006/128317A1, CN104778749A, CN111122598A,

### SUMAMRY

The invention is set out in the appended set of claims.

In one aspect, the present invention provides an automatic machine of vision detection device, as defined in claim 1, capable of performing surface quality detection on a workpiece with a complex curved surface.

The common workpiece surface quality machine vision detection device used on industrial production line is mainly composed of camera, surface light source and annular light source. During work, the light sources are always in a lightened state, the camera shutter is controlled to obtain one or a series of two-dimensional images, and then surface defect detection is performed by means of the two-dimensional images. This machine vision detection device has the problems that the positions of the light sources cannot be changed, the illumination mode is single, and for the workpiece with complex curved surface, light cannot be excited from multiple angles, so that all defect types on the surface of the workpiece cannot be displayed, and the omission ratio is high.

There is another machine vision detection device which is mainly composed of a camera and laser rays. The camera is used for shooting laser ray light bars on workpiece and converting the light bars into point clouds with three-dimensional information, so as to realize surface quality detection. This detection device has the problems that the distance between the laser rays is relatively great and is usually at a millimeter grade, so the sparse point clouds are obtained and dense workpiece surface information cannot be obtained. This detection device is suitable for quantitative measurement of a designated region and is difficult to adapt to the detection of surface defects (such as scratches, concave pits, convex hulls and indentations).

The present invention aims at providing a machine vision detection system which can present a plurality of surface defect types by a general illumination solution and can obtain the dense three-dimensional surface information of a to-be-inspected workpiece.

An automatic machine of vision detection device for a workpiece with a complex curved surface provided wherein the device is provided with at least one defect detection unit, wherein the defect detection unit comprises a camera, light sources and an detection unit bracket; the camera and the light sources are arranged on the detection unit bracket. The automatic machine of vision detection device is provided wherein one camera and a plurality of light sources configured for the camera are used as one detection unit; the distance between the light source and a to-be-inspected workpiece is five times greater than the shooting field of view of the camera; when the same detection unit performs a shooting task, the light sources are sequentially lightened; when the light sources are lightened once, the camera shoots an image of the to-be-inspected object once; only one light source is lightened when the camera shoots each time; and the strongest illumination areas of the light sources in the same detection unit on the to-be-inspected object are not overlapped with one another. The strongest illumination areas of the light sources on the to-be-inspected object refer to envelope areas with strongest reflection when the light sources irradiate on the to-be-inspected object. The strongest illumination area is generally the location of the most intense light-spot illuminated by the light source. In the case of a point light source, the strongest illumination area is a circular envelope area.

According to a light source control solution, optionally, the light sources are controlled by a controller, a lighting rule of the light sources is preset in the controller, each light source has a unique light source code, and a camera has a unique camera code; the lighting rule comprises correspondence between the camera codes and the light source codes and a lighting sequence of the light sources. The camera codes correspond to the light source codes, for example, No. 1 camera corresponds to No. 01 light source, No. 04 light source and No. 06 light source. The No. 01 light source, the No. 04 light source and the No. 06 light source are independently lighted according to the sequence.

Optionally, the detection unit bracket is circular, and the circle center of the detection unit bracket is positioned in a mounting area of the camera; the surface of the detection unit bracket is taken as a reference surface, and the projection distances between each light source in each group of light sources and the camera on the reference surface are equal. The projection distances are equal, are not absolutely equal in mathematical significance, but are equal in deviation within an allowable range after various factors are considered in engineering application.

Optionally, the detection unit bracket is polygonal, and is formed by assembling rectangular pipes and a triangular connecting piece through fasteners, and the rectangular pipes form a framework of the detection unit bracket; the triangular connecting piece is arranged between the connecting parts of the two rectangular pipes, one mounting edge of the triangular connecting piece is in contact with one rectangular pipe fitting and is fixed by the fastener, and the second mounting edge of the triangular connecting piece is in contact with the other rectangular pipe fitting and is fixed by the fastener; and an included angle formed after the two rectangular pipes are connected is equal to an included angle formed by the two mounting edges of the triangular connecting piece.

Further, relays are fixedly mounted on the rectangular pipes, each light source corresponds to one relay, a wire is arranged between each relay and the corresponding light source; one end of each wire is fixed with a wiring end of the corresponding relay, and the other end of each wire is fixed with a wiring end of the corresponding light source; and the wires extend from output ends of the relays to the outer direction far away from the rectangular pipes and then extend to the inner direction close to the rectangular pipes. Therefore, stable electric connection between the light sources and the relays can be guaranteed.

Further, signal input wires are arranged at input ends of the relays, each signal input wire is led out from the input end of the corresponding relay, extends forwards and then extends backwards, and the input ends of the relays are taken as the front and the output ends of the relays are taken as the rear. Therefore, stable connection between the relays and the signal input wires can be guaranteed.

According to an optional solution, each light source is arranged on a light source bracket; the light source bracket comprises a hanging lug and a hanging piece; the hanging lugs are fixed to the detection unit bracket; the light sources are fixed on the hanging pieces; the hanging pieces are parallel to the light source bracket; the hanging pieces are rotatably connected with the hanging lugs; and damping exists between the hanging pieces and the hanging lugs.

Further, the rotation range between the hanging pieces and the hanging lugs is ±10°. Therefore, the projection distances of the light sources and camera in the same group on a reference surface can be equal.

Further, the hanging lugs are provided with lug parts extending towards the direction far away from the detection unit bracket; the hanging pieces are provided with beams and connecting parts extending towards the direction close to the detection unit bracket; the light sources are fixed on the beams; the connecting parts are overlapped with the lug parts; a light source rotating shaft is arranged between each connecting part and the corresponding lug part; and the light source rotating shafts are fixed with the connecting parts or the lug parts. The illumination areas of the light sources on an inspected object can be adjusted by rotating the beams.

Further, the light source rotating shafts are fixed with the connecting parts and are connected with an output shaft of a light source driving motor. Due to the existence of the light source rotating shaft, the positions of the light

sources can be adjusted, such that the device can adapt to inspected objects of different sizes and specifications. By using an encoder or an angle measuring instrument, the relationship between the size of the inspected object and the rotating angle of the light sources can be obtained, and the positions of the light sources are conveniently and rapidly calibrated when the inspected object is replaced.

The optional solution is as follows: the camera is taken as a center, any surface perpendicular to the axis of the camera is taken as a reference surface, the light sources are grouped according to the distance between the light sources and the camera, the distance between the light sources in the same group and the camera is equal, and the distance between the light sources in different groups and the camera is random.

Optionally, the camera is taken as the center, and the polar coordinate angle of the light sources is random. Therefore, the light sources can irradiate a tested object discretely as much as possible, thus images of the to-be-tested workpiece under multiple different polishing solutions are obtained, and more types of surface defects are presented.

Optionally, the ratio of the distance between any two adjacent light sources to the shooting distance between the camera and the tested object is 0.1 to 0.2. Therefore, the images shot by the camera are clear, and illumination areas of the light sources on the tested object are not overlapped.

A railway steel rail is taken as the to-be-tested workpiece, and the solution of the machine vision detection device is applied. The surface quality requirements of the steel rail include: weld joints and welding slag around the weld joints are cleaned, the polished surface is required to be smooth, the rail footing (the curved surface part for transition from the rail waist to the rail bottom surface) is smooth, transverse polishing is not required, and the steel rail base material is not required to be damaged. The transverse direction refers to the length direction of the steel rail.

An automatic vision detection system for surface quality of a steel rail comprises at least one group of the detection device, wherein the detection object of the system is the steel rail which is positioned on a production line and is subjected to overlap removal; the detection system is arranged after a first removal process of a steel rail weld joint; or two detection devices are provided, wherein the first set of the detection device is arranged after the steel rail dislocation quantity detection and before the first removal process of the steel rail weld joint, and the second set of the detection device is arranged after the first removal process of the steel rail weld joint.

Further, the steel rail detection system is provided with a frame; the automatic detection device is arranged in the frame; the frame is provided with side plates and a top plate; the side plates and the top plate enclose the interior of the frame to form a dark room; one side plate is provided with an inlet for allowing the steel rail to enter, and the opposite side plate is provided with an outlet for allowing the steel rail to be output.

Optionally, the side plates are provided with doors or beds, or the side plates are detachably connected with the frame.

The optional solution is that there are four groups of detection devices, each group corresponds to an detection area of the steel rail, the detection devices enclose an detection area, and the steel rail enters the detection area along the axial direction; and the distance between two opposite detection devices is not less than 1,050 mm. Therefore, the detection devices can be applied to steel rail detection on a long rail production line.

Optionally, the four groups of detection devices comprise a top surface detection mechanism aligned with the top surface of the rail, a bottom surface detection mechanism aligned with the bottom surface of the rail, a first rail waist detection mechanism aligned with one rail waist surface and a second rail waist detection mechanism aligned with the other rail waist surface; the two rail waist detection mechanisms are respectively provided with an upper detection unit, a middle detection unit and a lower detection unit, and each detection unit is provided with a camera, a light source and a light source controller; and an included angle between the camera axis of the upper detection unit and the horizontal plane is tilted downwards by 27-34°, the camera axis of the middle detection unit is parallel to the horizontal plane, and an included angle between the camera axis of the lower detection unit and the horizontal plane is tilted upwards by 41-49°.

Optionally, any group of detection devices on the rail waist surface comprises a back plate; the upper detection unit, the middle detection unit and the lower detection unit are respectively arranged on the back plate through respective position adjusting mechanisms; the back plate comprises a main plate, an upper wing plate and a lower wing plate, and the main plate is parallel to the height direction of the steel rail to be inspected; the upper wing plate is intersected with the main plate, and the top of the upper wing plate is closer to the steel rail to be inspected than the bottom of the upper wing plate; and the lower wing plate is intersected with the main plate, and the top of the lower wing plate is farther away from the steel rail to be inspected than the bottom of the lower wing plate.

Optionally, the camera of the upper detection unit is close to the area where the upper wing plate and the main plate are intersected, one part of the light source of the upper detection unit is arranged in the area covered by the upper wing plate, and the other part of the light source of the upper detection unit is arranged in the area covered by the main plate.

Optionally, the camera of the middle detection unit and the light source thereof are arranged in the area covered by the main plate.

Optionally, the camera of the lower detection unit and the light source thereof are arranged in the area covered by the lower wing plate.

Therefore, any group of detection devices on the rail waist surface can realize full surface detection of the surface, positioned below the rail top, of the rail waist surface, the rail waist side surface, a small arc surface for transition from the surface below the rail top to the rail waist side surface, a large arc surface for transition from the rail waist to the rail bottom, and a vertical surface, adjacent to the rail bottom, of the rail waist surface.

In long rail production, the steel rail surface detection requirements also include: the height of a rail bottom welding rib (weld joint) is not less than 0.5 mm after weld beading is removed, thus the polished steel rail needs to be quantitatively measured.

According to the steel rail surface quality requirements, the steel rail surface defect detection indexes after weld beading removal are specifically as follows: whether there is a transverse polishing track or not and whether there is a step between the polished surface and a steel rail base material or not. The present invention further provides a method for inspecting steel rail surface defects by using the detection device or the detection system.

A method for inspecting surface quality of a steel rail is provided. The method comprises the following steps: inspecting surface defects of the steel rail by using the detection device, sequentially lightening light sources when the same detection unit performs a shooting task, shooting an image of an to-be-inspected object once by a camera when the light sources are lightened once, wherein there is only one light source when the camera shoots each time; acquiring a plurality of images of the to-be-inspected object in each shooting task, wherein each image of the to-be-inspected object corresponds to an image which has object information and illumination information when the light source illuminates the to-be-inspected object; and fusing spatial information and inter-frame information of the images of the to-be-inspected object to reconstruct a normal map of the surface of the to-be-inspected object, searching a position meeting a gradient change characteristic threshold in the normal map, and marking the position as a defect. Therefore, a step defect between a polished surface and a steel rail base material can be inspected. The normal map of the surface of the to-be-inspected object is obtained by fusing the spatial information and the inter-frame information of the images of the to-be-inspected object, so the interference of a pseudo defect caused by highlight, chromatic aberration, etc. of the polished surface can be removed, and only a real processing defect is reserved in the normal map.

The method uses the solution provided by the automatic surface quality detection device for the workpiece with complex curved surface for detection, and the method uses the automatic steel rail detection system for steel rail full surface quality detection.

Optionally, lines are extracted from the normal map, whether the line direction is parallel to the steel rail length direction or perpendicular to the steel rail length direction is judged, and if the lines perpendicular to the steel rail length direction appear, the lines are marked as defects. On a long rail production line, the length direction of the steel rail is determined. Therefore, the length direction of the steel rail can be used as a judgment reference. Therefore, the transverse grinding trace of the steel rail can be identified.

Optionally, before the normal map of the to-be-inspected object is obtained, threshold segmentation is carried out on the image of the to-be-inspected object, the image area smaller than the set threshold is removed, and inter-frame information extraction and spatial information extraction are only carried out on the remaining area.

Optionally, after the surface defect of the steel rail is inspected, the surface quality of the steel rail is quantitatively measured through line laser and the camera, a linear light bar is irradiated to the surface of the steel rail through a laser device in the quantitative measurement, the camera acquires a steel rail-light bar image of the steel rail and the light bar, the light bar is segmented from the steel rail-light bar image, points are discretely taken from the light bar along the X direction, light bar center pixel coordinates of each discrete point are extracted, and the searched light bar center point with the minimum vertical coordinate is used as a feature point; when the light bar center point pixel coordinates are extracted, the vector of the normal direction of any pixel point $(x_0, y_0)$ on the light bar in the image is recorded as $(n_x, n_y)$, and the pixel coordinates of the light bar center are $(x_0 + tn_x, y_0 + tn_y)$, wherein,

$$t = -\frac{n_x g_x + n_y g_y}{n_x^2 g_{xx} + 2 n_x n_y g_{xy} + n_y^2 g_{yy}},$$

$g = G(x,y) \otimes I(x,y)$, $\quad g_x = \frac{\partial G(x,y)}{\partial x} \otimes I(x,y)$, $\quad g_y = \frac{\partial G(x,y)}{\partial y} \otimes I(x,y)$; $I(x,y)$ represents a two-dimensional gray distribution function of a digital image, $g_{xx}$ represents a second-order derivative of g, and $g_{xy}$ represents the second-order derivative of g; the minimum value points of the second-order derivatives of the light bar curve are searched from the feature point to the left and right sides respectively, the minimum value points of the second-order derivatives on the left and right sides of the feature point are judged as steel rail weld joint boundary feature points, the two steel rail weld joint boundary feature points are used as the area where the weld joint is located, and the rest area is the steel rail base material; and the difference value of the feature point in the steel rail weld joint boundary and the feature point outside the steel rail weld joint boundary on the y axis is used as the height of the polished rail bottom welding rib.

Therefore, the gray distribution characteristic of the light bar is utilized, the anti-interference capability is high, the extraction precision is high, and the extraction of the sub-pixel level of the light bar can be realized.

Optionally, before coordinates of the light bar center point are calculated, a threshold method is used for roughly extracting the light bar boundary of the steel rail-light bar image, then the light bar width w is calculated through the roughly extracted light bar boundary, a Gaussian convolution kernel corresponding to the width is generated, finally, the Gaussian convolution kernel is used for calculating the light bar inner area through the formula to accurately extract the light bar center, and therefore the coordinates of the light bar center are obtained.

The pixel coordinate of the $i^{th}$ light bar center is recorded as $(x_i, y_i)$, the horizontal pixel coordinate of the light bar center point is recorded as $x_i$, and the point with the minimum vertical coordinate of the light bar center point is searched to serve as a feature point C; differential calculation and Gaussian filtering processing are carried out on all light bar center points to obtain a filtered first-order derivative $ki$,

$$k_i = \frac{1}{4}\left(\frac{y_{i+1}-y_{i-1}}{x_{i+1}-x_{i-1}} + \frac{y_{i+2}-y_{i-2}}{x_{i+2}-x_{i-2}} + \frac{y_{i+3}-y_{i-3}}{x_{i+2}-x_{i-2}} + \frac{y_{i+4}-y_{i-4}}{x_{i+2}-x_{i-2}}\right)$$ ;and differential calculation and Gaussian filtering processing are carried out on the filtered first-order derivative to obtain a filtered second-order derivative

$$D_i, D_i = \frac{1}{4}\left(\frac{k_{i+1}-k_{i-1}}{x_{i+1}-x_{i-1}} + \frac{k_{i+2}-k_{i-2}}{x_{i+2}-x_{i-2}} + \frac{k_{i+3}-k_{i-3}}{x_{i+3}-x_{i-3}} + \frac{k_{i+4}-k_{i-4}}{x_{i+4}-x_{i-4}}\right)$$ ; finally, the minimum value of the second-order derivative is searched for from the feature point C to the left side and the right side to determine the feature point of the steel rail weld joint boundary. Therefore, quantitative measurement of the machining allowance of a polished steel rail is achieved.

Specifically, the light bar center coordinate extraction method comprises the following specific implementation processes:

Step 1: setting a threshold value *th*, and inputting a steel rail-light bar image *I* to be processed.

Step 2: preprocessing the steel rail-light bar image *I*.

Step 3: sequentially scanning all columns of pixels to obtain a first pixel coordinate greater than *th* and a last pixel coordinate greater than *th* on the column, and respectively recording the first pixel coordinate and the last pixel coordinate as ($B_1$, *col)and* ($B_2$, *col*) wherein the coordinates are coordinates of a light bar boundary obtained by coarse extraction.

Step 4: calculating the light bar width on each column by using the light bar boundary obtained by coarse extraction, and recording the light bar width of the $i^{th}$ column as $w_i = |B_1 - B_2|$, wherein the maximum light bar width is $w_{max} = \max \{w_i | N \geq i \geq 1\}$, and *N* is the column number of the image.

Step 5: generating an arithmetic progression array $M=\{10,20,..., w_{max}\}$ by taking 10 as a tolerance; constructing a Gaussian convolution kernel $G_{mi}$ with the length and width of $\frac{2\sqrt{3}}{3}m_i$ and corresponding first-order and second-order partial derivative convolution kernels by using an element $m_i$ in the array.

Step 6: for the $i^{th}$ column of pixels in the image, selecting the convolution kernel constructed by the element $m_i$ closest to $w_i$ in the array *M* generated in the Step 5 to calculate a vector $(n_x, n_y)$ of the row coordinates of the $i^{th}$ column of pixels in the normal direction of a pixel point in an interval of $[\frac{B_1+B_2}{2} - 0.2w, \frac{B_1+B_2}{2} + 0.2w]$.

Step 7: substituting a feature vector obtained by calculation in the Step 5 into a formula (3-21) to calculate t, and when $|tn_x| \leq 0.5$, and $|tn_y| \leq 0.5$, the light bar center is positioned in the current pixel; and finally solving to obtain the pixel coordinate of the current light bar center as $(x_0 + tn_x, y_0 + tn_y)$. And

Step 8: repeating the Steps 6 to 7 for each column, and finally extracting to obtain all light bar centers.

Specifically,

A weld joint positioning algorithm comprises the following specific algorithm steps:

Step 1: extracting the light bar center of a linear structured light image, and recording the $i^{th}$ light bar center as $P_i$ and the image coordinate as $(x_i, y_i)$.

Step 2, performing traversal search on the light bar center point $P_i$ extracted in the Step 1, and taking the point with the minimum vertical coordinate as a feature point C.

Step 3: calculating a first-order derivative at each point of the light bar center point extracted in the Step 1 by using a formula (4-2), and filtering the calculation result by using a one-dimensional Gaussian filter, wherein the size of the filter is 51, $\mu$ is set as 0, and $\sigma$ is set as 17。

Step 4: calculating a second-order derivative $D_i$ at each center point by using the first-order derivative obtained after Gaussian filtering in the Step 3 and using a differential method, and filtering the second-order derivative obtained by calculation by using the one-dimensional Gaussian filter, wherein the size of the filter is 51, $\mu$ is set as 0, and $\sigma$ is set as 17.

Step 5: searching the minimum points of the second-order derivatives from the feature point C to the left and right sides respectively, and judging the minimum points of the second-order derivatives at the left and right sides of the feature point C as steel rail weld joint boundary feature points.

Optionally, system correction is performed when the three-dimensional coordinate of the light bar center is calculated, that is, a horizontal auxiliary measurement reference C is introduced, the distance $m_i$ from the auxiliary measurement reference C to a calibration reference B is measured, the distance $n_i$ from the measurement point to the B is subtracted from the distance $m_i$ from the C to the B of the corresponding point to obtain Hi, H1 and H2 of selected measurement points positioned on two sides of the weld joint are measured and calculated, and the IH1-H21 is calculated to obtain alignment tolerance.

A solution that a smoke collecting hood serves as a to-be-inspected workpiece, and the machine vision detection device is applied to a smoke collecting hood production line of a range hood is adopted.

An automatic machine vision detection station used on a smoke collecting hood production line is provided wherein the machine vision detection station is arranged behind a smoke collecting stove stamping station, and the stamping station and the machine vision detection station convey materials through a feeding and discharging manipulator; the machine vision detection station comprises a detection chamber and a detection system located in the detection chamber, the detection chamber is provided with a feeding port, and a material bracket is arranged in the detection chamber; seen from the front view direction, the material bracket is located in the area covered by the feeding port, the detection system is located above the material bracket, side light shielding plates are arranged above the feeding port, and the detection system is surrounded by the multiple side light shielding plates; a top light shielding plate is arranged at the top of the detection chamber, and a dark chamber is defined by the top light shielding plate and the side light shielding plates; and the detection system comprises the above mentioned detection device.

Further, the material bracket comprises a material supporting frame and a lifting assembly, wherein the lifting assembly comprises a fixed part and a moving part, and the moving part is fixed with the material supporting frame; lowest limiting pieces are arranged on two sides of the material supporting frame respectively, and the distance between the two lowest limiting pieces is smaller than the width of a to-be-inspected workpiece; and the width of the material supporting frame is smaller than the distance between the two lowest limiting pieces.

Further, the manipulator comprises a mechanical arm and a feeding tail end, the feeding tail end acquires the to-be-inspected workpiece from a stamping line at a first position and reaches a second position after rotating by 180°, and the mechanical arm enters the feeding port when the feeding tail end is located in the second position; and when the moving part of the lifting assembly is located in the lowest position, the distance between the top surface of each lowest limiting piece and the top surface of the material supporting frame is larger than the height of the feeding tail end.

Further, when the moving part of the lifting assembly is located in the highest position, the distance between the top surface of the material supporting frame and the light source of the detection device is larger than 5 times of the view field of the camera of the detection device.

Further, the to-be-inspected workpiece comprises a first detection area and a second detection area, the first detection area comprises a top surface, a bottom surface and connecting surfaces, the connecting surfaces are four inclined surfaces, and the top surface is parallel to the bottom surface; the second detection area is a folded edge perpendicular to the top surface; and the first detection device takes the first detection area as an detection object, and the second detection device takes the second detection area as an detection object.

In a second aspect, the present invention provides in the automatic machine of vision detection device according to claim 1, a data processing system for reconstructing three-dimensional surface information of a to-be-inspected workpiece by using a plurality of images illuminated from different angles.

A data processing system comprises a data processor, a graphic processor and a data memory, wherein the data processor reads images from a data memory and inputs the images into the graphic processor; an image recognition network is preset in the graphic processor; the image recognition network comprises image input, a feature extractor for acquiring effective features of the input images, a maximum pooling layer and a normal regression unit. The automatic machine of vision detection device is provided wherein the images are input into an initial fusion module; the initial fusion module enables the current images to be in one-to-one correspondence with illumination information of the current images; the images fused with the illumination information and output by the initial fusion module are input into the feature extractor; the feature extractor comprises an inter-frame information extractor and a spatial information extractor; the inter-frame information extractor and the spatial information extractor both use a three-dimensional convolution kernel; inter-frame information occupies one dimension, and spatial information occupies two dimensions; the input of the inter-frame information extractor is the output of the initial fusion module, and the input of the spatial information extractor is the output of the inter-frame information extractor; and the output of the spatial information extractor is used as the input of the maximum pooling layer.

A normal regression unit performs convolution operation on the output of a maximum pooling layer, and then performs L2 regularization, and the result of the regularization output is a normal map.

Further, the last convolution operation of the normal regression unit uses 3 channels.

Further, other convolution operations of the image recognition network use 128 channels.

Further, the step of fusing the spatial information and the inter-frame information of the image of the object to be measured comprises the following steps:

Establishing a formula of an information fusion module: $F_0 = \mathcal{F}_{dropout}(\sigma(Con_{6\times1\times1}(IL_{input}))$ ;

Wherein, $IL_{input}$ represents the input of the formula; $IL_{input}$ includes each image and light source intensity obtained by each shooting task, and light source direction; $F_0$ represents the output of the formula; $Con_{6\times1\times1}$ represents a convolution kernel with a size of $6 \times 1 \times 1$ ; $Con_{6\times1\times1}(IL_{input})$ represents a convolution operation on $IL_{input}$ ; $\sigma$ represents a leaky Relu activation function; $\sigma(Con_{6\times1\times1}(IL_{input})$ represents an activation operation on $Con_{6\times1\times1}(IL_{input})$. $\mathcal{F}_{dropout}$ represents a dropout operation; $\mathcal{F}_{dropout}(\sigma\left(Con_{6\times1\times1}(IL_{input})\right)$ represents a dropout operation on $\sigma(Con_{6\times1\times1}(IL_{input})$. Convolution operation, activation operation and dropout operation belong to conventional functions or conventional operations of deep learning.

Each image has R, G and B channels, a light source information graph of each image during shooting needs X, Y and Z coordinate values for representation, and a value in each coordinate direction is stored in one channel; and three-channel information of each image, three-channel information of the corresponding light source information graph are operated through a $6 \times 1 \times 1$ convolution kernel, therefore, the image and the corresponding light source information are fused, and the one-to-one correspondence relationship is prevented from being disturbed by subsequent operation.

Optionally, inter-frame information extraction is carried out by using an *IRFE* (inter-frame information extractor).

*IRFE* is composed of a convolution kernel with the size of $5 \times 1 \times 1$, a leaky Relu activation function and a dropout layer: $IRFE^i(\cdot) = \mathcal{F}_{dropout}(\sigma\left(Con_{5\times1\times1}^i(\cdot)\right)$ , wherein ▪ represents the input of the inter-frame information extractor, $Con_{5\times1\times1}^i(\cdot)$ represents that i times of convolution is carried out on the input, and the size of the convolution kernel is $5 \times 1 \times 1$; and $\sigma\left(Con_{5\times1\times1}^i(\cdot)\right)$ represents that an activation operation on $Con_{5\times1\times1}^i(\cdot)$ , and $\mathcal{F}_{dropout}(\sigma\left(Con_{5\times1\times1}^i(\cdot)\right)$ represents that a dropout operation on $\sigma\left(Con_{5\times1\times1}^i(\cdot)\right)$ .

Further, the step of extracting inter-frame information by using *IRFE* is as follows:

The initial input ▪ of the *IRFE* is set as $F_0$,

$$F_{IRF}^1 = IRFE^1(F_0) \tag{3}$$

$$F_{IRF}^2 = IRFE^2(F_{IRF}^1) \tag{4}$$

$$\vdots$$

$$F_{IRF}^K = IRFE^K(F_{IRF}^{K-1}); \tag{5}$$

Wherein, $F_0$ represents the output of an information fusion module formula; $F_{IRF}^1$ represents the output of a first inter-frame information extractor, and $IRFE^1(F_0)$ represents that the first inter-frame information extractor takes $F_0$ as the input; K is the number of the *IRFE*, $F_{IRF}^K$ represents the output of the Kth inter-frame information extractor, and $IRFE^K(F_{IRF}^{K-1})$ represents that the Kth inter-frame information extractor takes the output of the (K-1)th inter-frame information extractor as the input. Preferably, K = 3.

Further, the spatial information extraction is carried out by using *IAFE* (spatial information extractor), wherein the *IAFE* is composed of a convolution kernel with the size of $1 \times 3 \times 3$; and a leaky Relu activation function is:

$IAFE^i(\cdot) = \sigma(Con^i_{1\times3\times3}(\cdot))$ , wherein $\cdot$ represents the input of the spatial information extractor, $Con^i_{1\times3\times3}(\cdot)$ represents that i times of convolution is carried out on the input, the size of the convolution kernel is $1 \times 3 \times 3$, and $\sigma(Con^i_{1\times3\times3}(\cdot))$ represents that $Con^i_{1\times3\times3}(\cdot)$ is activated.

Further, the initial input of the *IAFE* is set as $F^K_{IRF}$ ,

$$F^1_{IAF} = IAFE^1(F^K_{IRF}) \qquad (6)$$

$$F^2_{IAF} = IAFE^2(F^1_{IRF}) \qquad (7)$$

$$F^L_{IAF} = IAFE^L(F^{L-1}_{IRF}), \qquad (8)$$

Wherein, $F^1_{IAF}$ represents the output of the first spatial information extractor, $F^K_{IRF}$ represents the input of the first spatial information extractor, $F^L_{IAF}$ represents the output of the L$^{th}$ spatial information extractor, and $IAFE^L(F^{L-1}_{IRF})$ represents that the output of the (L-1)$^{th}$ spatial information extractor is taken as the input of the L$^{th}$ spatial information extractor.

Preferably, L = 3.

Further, $F^L_{IAF}$ is used as the input of maximum pooling, $F_{MAX} = MP(F^L_{IAF})$ , (9), MP represents maximum pooling max-pooling operation, and $F_{MAX}$ represents the output of maximum pooling. The operation of this step extracts the most significant information between different channels, and also fixes an input channel for the subsequent operation.

Further, $F_{MAX}$ is used as the input to perform normal vector solving:

$$N_{ij} = NME(F_{MAX}),$$

$$= L^2_{norm}(\sigma(Con_{1\times1}(\sigma(Con_{1\times1}(\sigma(Con_{1\times1}(F_{MAX}))))))), \qquad (10)$$

Wherein, $Con_{1\times1}$ represents convolution with a size of $1 \times 1$, $Con_{1\times1}(F_{MAX})$ represents convolution operation on $F_{MAX}$, the size of the convolution kernel is $1 \times 1$, $\sigma$ represents a leaky Relu activation function, and $L^2_{norm}$ represents L2 regularization.

$N_{ij}$ represents the normal vector of a point with a pixel coordinate of (i, j), and the normal map formed by the normal vectors of all pixels of the whole image represents the surface three-dimensional information of the to-be-inspected object.

The detection device is used for collecting images and can be used as an independent collecting device. The data processing system can work as long as the images are input, and the input images can be obtained through the detection device and can also be obtained through other ways.

In a third aspect of the present invention, an automated inspection system, as defined in claim 12, is provided, which includes an image acquisition device and a data processing device. The image acquisition device is any of the above-mentioned automated visual inspection device for complex curved workpieces, and the data processing device is, for example, any of the above data processing system for reconstructing three-dimensional surface information of a workpiece based on a plurality of images illuminated from different angles; the image acquisition device and the data processing device communicate and transmit data in a wireless or wired manner.

The automatic machine of vision detection device has the following advantages: 1, the camera and three or more point light sources form light sources in three or more directions to irradiate an object, multiple groups of light paths with different reflection paths are formed, the high-reflection area positions of all the sets of light paths are different, complete area data can be obtained after deep learning fusion, the forms of defects and normal products are described from multiple angles, and the problem that the real form of the product cannot be reflected through a single view angle is effectively solved.

2, After the relative positions of the light sources and the camera are optimized, a light source-camera module capable of being produced in a standardized manner is formed, and only the light source-camera module needs to be arranged aiming at to-be-inspected parts with different shapes and sizes; a plurality of surface defect types are presented in a general illumination manner, so the problem that different products and different defect types of other detection solutions need different illumination solutions is solved.

3, Complete regional data is obtained by image fusion of a plurality of groups of light paths, and excellent high-reflection resistance is realized.

4, When the automatic machine of vision detection device is used for steel rail detection, qualitative defect detection of the surface quality of the steel rail and quantitative detection of machining allowance can be realized in a full-automatic manner, and manual measurement such as manual eye observation and micrometer on the current long rail production line is replaced, so that the detection efficiency is high, and the detection accuracy is high; the qualitative defect detection can be used for automatically inspecting milling traces and grinding traces at the weld joint of the steel rail, automatically identifying transverse grinding lines and giving an alarm, and automatically identifying that the weld joint is not completely removed and edges, corners and steps are formed and giving an alarm.

5, When the automatic machine of vision detection device is used for smoke collecting hood detection, automatic production of the whole smoke collecting stove assembly line is realized, defect positions are identified, and when a plurality of defects of the same type continuously appear in the same region, the stamping die or the process fault can be prompted. And

6, The data processing system of the automatic machine of vision detection device is used for removing interference of factors such as highlight by fusing illumination information, inter-frame information and spatial information of images, and surface texture information of the workpiece is retained, so that the surface condition of the workpiece is better presented, and the defect detection rate is increased.

## BRIEF DESCRIPTION OF THE DRAWINGS

FIG.1 is a schematic diagram of an detection device with a circular detection unit bracket.

FIG.2 is a schematic diagram of an detection device with a rectangular detection unit bracket.

FIG.3 is a routing schematic diagram of FIG.2.

FIG.4 is a schematic diagram of a plurality of detection units formed by cameras and light sources for inspecting steel rails.

FIG.5 is a layout schematic diagram of an detection device of FIG.4.

FIG.6 is a layout schematic diagram of an upper detection unit, a middle detection unit and a lower detection unit of FIG.5.

FIG.7 is a three-dimensional schematic diagram of cameras and light sources.

FIG.8 is a layout schematic diagram of cameras and light sources.

FIG.9 is a schematic diagram of a machine vision detection station when a smoke collecting hood is used as an detection object.

FIG.10 is a schematic diagram of FIG.9 after removing a light shielding plate.

FIG.11 is a network schematic diagram using a deep learning fusion image.

FIG.12 is a process schematic diagram using a deep learning fusion image. And

FIG.13 is a comparison result of rendering image results based on an MERL data set.

## DETAILED DESCRIPTION

This solution is described with reference to the drawings.

The present invention provides an automatic steel rail detection system for inspecting surface quality of a steel rail. For example, the surface quality of the polished steel rail is quantitatively and qualitatively inspected.

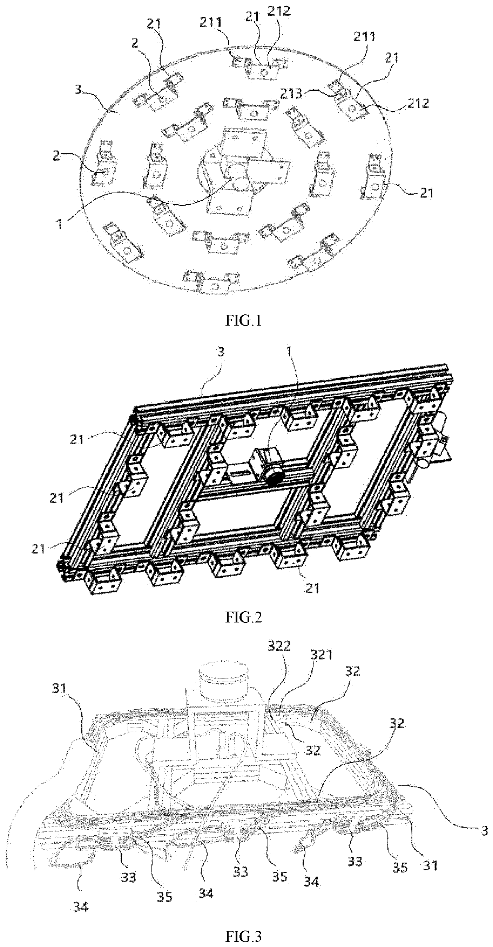

As shown in FIG.1, in some embodiments, an automatic machine of vision detection device for a workpiece with a complex curved surface is provided wherein the system is provided with at least one defect detection unit, wherein the defect detection unit comprises a camera 1, light sources 2 and an detection unit bracket 3; the camera 1 and the light sources 2 are arranged on the detection unit bracket 3; one camera 1 and a plurality of light sources 2 configured for the camera are used as one detection unit; the distance between the light source 2 and a to-be-inspected workpiece is five times greater than the shooting field of view of the camera; when the same detection unit performs a shooting task, the light sources are sequentially lightened; when the light sources are lightened once, the camera shoots an image of the to-be-inspected object once; only one light source is lightened when the camera shoots each time; and the strongest illumination areas of the light sources in the same detection unit on the to-be-inspected object are not overlapped with one another. The strongest illumination area of light sources on an inspected object refers to a circular envelope area with the strongest reflection of light irradiated on the inspected object by the light sources.

As shown in FIG.1, in some embodiments, an automatic detection device comprises a camera 1, light sources 2 and an detection unit bracket 3, wherein the camera 1 and the light sources 2 are arranged on the detection unit bracket 3; one camera 1 and a plurality of light sources 2 configured for the camera 1 are taken as one detection unit, light spots of the light sources 2 in the same detection unit are mutually independent in a coverage area on the inspected object, the light sources 2 are sequentially lightened when the same detection unit performs a shooting task, the camera 1 shoots an image of the to-be-inspected object once when the light sources 2 are lightened once, and only one light source 2 is lightened when the camera 1 shoots the image once; in the process of a single shooting task, the positions of the light sources 2 and the camera 1 are relatively fixed; a plurality of images of the to-be-inspected object are acquired in each shooting task, and each image of the to-be-inspected object has object information and illumination information when corresponding to one light source 2 to illuminate the inspected object; and a three-dimensional image of the surface texture of the to-be-inspected object is obtained by fusing spatial information and inter-frame information of the images of the to-be-inspected object.

In some embodiments, the light sources are controlled by a controller, a lighting rule of the light sources is preset in the controller, each light source has a unique light source code, and a camera has a unique camera code; the lighting rule comprises correspondence between the camera codes and the light source codes and a lighting sequence of the light sources. The camera codes correspond to the light source codes, for example, No. 1 camera corresponds to No. 01 light source, No. 04 light source and No. 06 light source. The No. 01 light source, the No. 04 light source and the No. 06 light source are independently lighted according to the sequence.

As shown in FIG.1, in some embodiments, the light sources 2 are fixed to the detection unit support 3 through light source brackets 21, each light source bracket 21 is provided with one light source, each light source bracket 21 comprises a hanging lug 211 and a hanging piece 212, the hanging lugs 211 are fixed to the detection unit support 3, the light sources are fixed to the hanging pieces 212, the hanging pieces 212 and the hanging lugs 211 are rotatably connected, and damping exists between the hanging pieces 212 and the hanging lugs 211. The rotating range between the hanging pieces 212 and the hanging lugs 211 is $\pm 10°$. Therefore, the projection distances of the light sources and camera in the same group on a reference surface can be equal.

In some embodiments, as shown in FIG.1, the detection unit bracket 3 is circular, and the circle center of the detection unit bracket 3 is positioned in a mounting area of the camera 1; the surface of the detection unit bracket 3 is taken as a reference surface, and the projection distances between each light source 2 in each group of light sources and the camera 1 on the reference surface are equal. The projection distances are equal, are not absolutely equal in mathematical significance, but are equal in deviation within an allowable range after various factors are considered in engineering application.

In other embodiments, the detection unit bracket is polygonal, as shown in FIG.2 and FIG.3, the detection unit bracket 3 is rectangular. The detection unit bracket 3 is formed by assembling rectangular pipes 31 and a triangular connecting piece 32 through fasteners, and the rectangular pipes 31 form a framework of the detection unit bracket 3; the triangular connecting piece 32 is arranged between the connecting parts of the two rectangular pipes 31, one mounting edge 321 of the triangular connecting piece 32 is in contact with one rectangular pipe fitting 31 and is fixed by the fastener, and the second mounting edge 322 of the triangular connecting piece 32 is in contact with the other rectangular pipe fitting 31 and is fixed by the fastener; and an included angle formed after the two rectangular pipes 31 are connected is equal to an included angle formed by the two mounting edges 321, 322 of the triangular connecting piece 32.

As shown in FIG.3, relays 33 are fixedly mounted on the rectangular pipes, each light source 1 corresponds to one relay 33, a wire 34 is arranged between each relay 33 and the corresponding light source; one end of each wire 34 is fixed with a wiring end of the corresponding relay 33, and the other end of each wire 34 is fixed with a wiring end of the corresponding light source 2; and the wires 34 extend from output ends of the relays 33 to the outer direction far away from the rectangular pipes 31 and then extend to the inner direction close to the rectangular pipes 31. Therefore, stable electric connection between the light sources and the relays can be guaranteed.

As shown in FIG.3, signal input wires 35 are arranged at input ends of the relays 33, each signal input wire 35 is led out from the input end of the corresponding relay 33, extends forwards and then extends backwards, and the input ends of the relays 33 are taken as the front and the output ends of the relays 33 are taken as the rear. Therefore, stable connection between the relays 33 and the signal input wires 35 can be guaranteed. The signal output wires 35 are connected to an external power source or a signal source.

As shown in FIG.1 and FIG.2, in some embodiments, the hanging lugs 211 are provided with lug parts extending towards the direction far away from the detection unit bracket 3; the hanging pieces 212 are provided with beams and connecting parts extending towards the direction close to the detection unit bracket 3; the light sources are fixed on the beams; the connecting parts are overlapped with the lug parts; a light source rotating shaft 213 is arranged between each connecting part and the corresponding lug part; and the light source rotating shafts 213 are fixed with the connecting parts or the light source rotating shafts 213 are fixed with the lug parts. The illumination areas of the light sources on an inspected object can be adjusted by rotating the beams.

As shown in FIG.1, in some embodiments, the light source rotating shafts 213 are fixed with the connecting parts, and the light source rotating shafts 213 are connected with an output shaft of a light source driving motor. Due to the existence of the light source rotating shaft 213, the positions of the light sources can be adjusted, such that the device can adapt to inspected objects of different sizes and specifications. By using an encoder or an angle measuring instrument, the relationship between the size of the inspected object and the rotating angle of the light sources can be obtained, and the positions of the light sources are conveniently and rapidly calibrated when the inspected object is replaced.

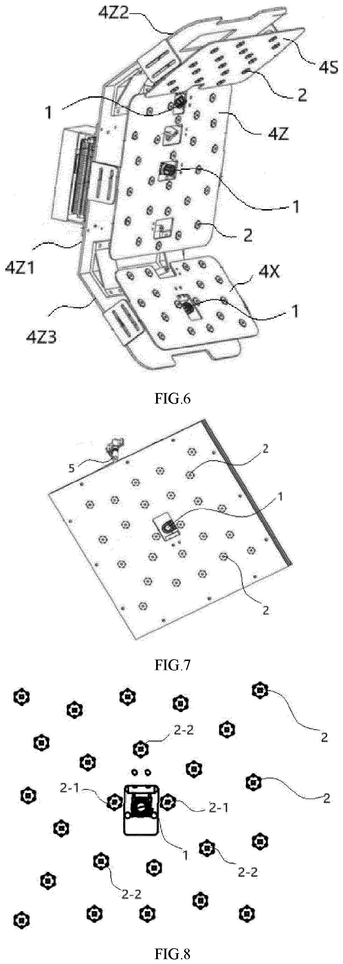

In some embodiments, as shown in FIG.7 and FIG.8, the camera 1 is taken as a center, any surface perpendicular to the axis of the camera 1 is taken as a reference surface, the light sources 2 are grouped according to the distance between the light sources and the camera 1, the distance between the light sources in the same group and the camera 1 is equal, and the distance between the light sources in different groups and the camera 1 is random. As shown in the figures, two light sources 2-1 are in one group, and three light sources 2-2 are in another group.

In some embodiments, the camera 1 is taken as the center, and the polar coordinate angle of the light sources is random. Therefore, the strongest area illuminated by the light source on the tested workpiece can be as discrete as possible.

In some embodiments, as shown in FIGS. 7 and 8, the ratio of the distance between any two adjacent light sources to the shooting distance between the camera 1 and the tested object is 0.1 to 0.2. Therefore, the images shot by the camera 1 are clear, and illumination areas of the light sources on the tested object are not overlapped.

In the production of long rails, the surface quality requirements of the steel rails include: weld joints and welding slag around the weld joints are cleaned, the polished surface is required to be smooth, the rail footing (the curved surface part for transition from the rail waist to the rail bottom surface) is smooth, transverse polishing is not required, and the steel rail base material is not required to be damaged.

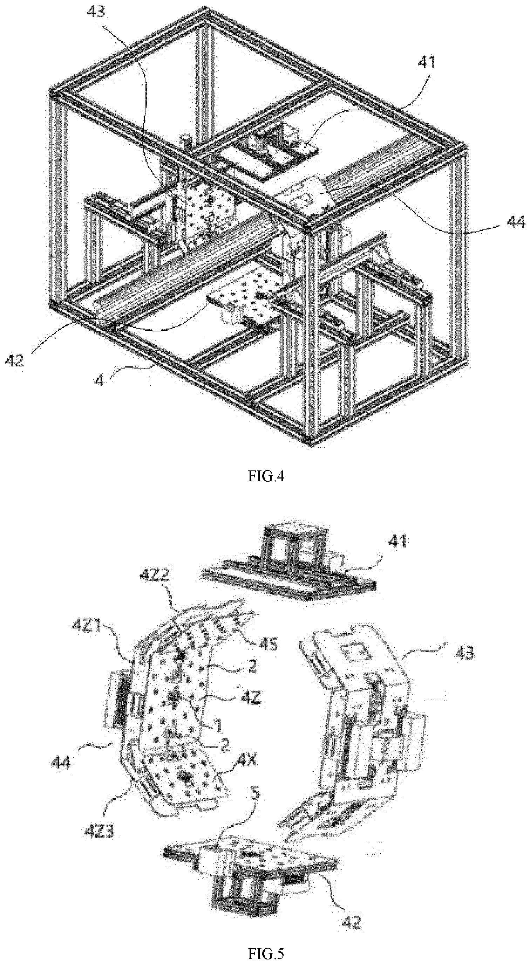

When the above automatic detection device is applied to the surface quality detection of steel rails, an automatic steel rail detection system is formed. In some embodiments, as shown in FIG.4, an automatic vision detection system for surface quality of a steel rail comprises at least one group of the detection system, wherein the detection object of the system is the steel rail which is positioned on a production line and is subjected to initial overlap milling or initial overlap grinding; the detection system is arranged after a first removal process of a steel rail weld joint; or two detection systems are provided, wherein the first set of the detection system is arranged after the steel rail dislocation quantity detection and before the first removal process of the steel rail weld joint, and the second set of the detection system is arranged after the first removal process of the steel rail weld joint.

As shown in FIG.4, in some embodiments, the steel rail detection system is provided with a frame 4; the automatic detection device is arranged in the frame 4; the frame 4 is provided with side plates and a top plate; the side plates and the top plate enclose the interior of the frame 4 to form a dark room; one side plate is provided with an inlet for allowing the steel rail to enter, and the opposite side plate is provided with an outlet for allowing the steel rail to be output.

In some embodiments, the side plates are provided with doors or beds, or the side plates are detachably connected with the frame 4.

In the production of long rails, the requirements for the surface detection of the steel rails further include: full-section detection of steel rail weld joints.

As shown in FIG.5 and FIG.6, in some embodiments, there are four groups of detection devices, each group corresponds to an detection area of the steel rail, the detection devices enclose an detection area, and the steel rail enters the detection area along the axial direction; and the distance between two opposite detection devices is not less than 1,050 mm. Therefore, the detection devices can be applied to steel rail detection on a long rail production line.

As shown in FIGS.5 and 6, in some embodiments, the four groups of detection devices comprise a top surface detection mechanism 41 aligned with the top surface of the rail, a bottom surface detection mechanism 42 aligned with the bottom surface of the rail, a first rail waist detection mechanism 43 aligned with one rail waist surface and a second rail waist detection mechanism 44 aligned with the other rail waist surface; the two rail waist detection mechanisms 43, 44 are respectively provided with an upper detection unit 4S, a middle detection unit 4Z and a lower detection unit 4X, and each detection unit is provided with a camera 1, a light source 2 and a light source controller; and an included angle between the camera 1 axis of the upper detection unit 4S and the horizontal plane is tilted downwards by 27-34°, the camera 1 axis of the middle detection unit 4Z is parallel to the horizontal plane, and an included angle between the camera 1 axis of the lower detection unit 4X and the horizontal plane is tilted upwards by 41-49°.

As shown in FIG.6, in some embodiments, any group of detection devices on the rail waist surface comprises a back plate; the upper detection unit 4S, the middle detection unit 4Z and the lower detection unit 4X are respectively arranged on the back plate through respective position adjusting mechanisms; the back plate comprises a main plate 4Z1, an upper wing plate 4Z2 and a lower wing plate 4Z3, and the main plate 4Z1 is parallel to the height direction of the steel rail M to be inspected; the upper wing plate 4Z2 is intersected with the main plate 4Z1, and the top of the upper wing plate 4Z2 is closer to the steel rail M to be inspected than the bottom of the upper wing plate 4Z2; and the lower wing plate 4Z3 is intersected with the main plate 4Z1, and the top of the lower wing plate 4Z3 is farther away from the steel rail M to be inspected than the bottom of the lower wing plate 4Z3.

As shown in FIG.6, in some embodiments, the camera 1 of the upper detection unit 4S is close to the area where the upper wing plate 4Z2 and the main plate 4Z1 are intersected, one part of the light source of the upper detection unit 4S is arranged in the area covered by the upper wing plate 4Z2, and the other part of the light source of the upper detection unit 4S is arranged in the area covered by the main plate 4Z1.

As shown in FIG.6, in some embodiments, the camera of the middle detection unit 4Z and the light source thereof are arranged in the area covered by the main plate 4Z1.

As shown in FIG.6, in some embodiments, the camera 1 of the lower detection unit 4X and the light source thereof are arranged in the area covered by the lower wing plate 4Z3.

Therefore, any group of detection devices on the rail waist surface can realize full surface detection of the surface, positioned below the rail top, of the rail waist surface, the rail waist side surface, a small arc surface for transition from the surface below the rail top to the rail waist side surface, a large arc surface for transition from the rail waist to the rail bottom, and a vertical surface, adjacent to the rail bottom, of the rail waist surface.

In long rail production, the steel rail surface detection requirements also include: the height of a rail bottom welding rib (weld joint) is not less than 0.5 mm after weld beading is removed, thus the polished steel rail needs to be quantitatively measured.

In some embodiments, a detection device is provided with a line laser 5, an included angle is formed between the axis of the line laser 5 and the axis of the camera 1, and when the light sources are lightened, the line laser 5 does not emit laser; and when the line laser 5 emits laser rays, the light sources are not lightened.

According to the surface quality requirement of the steel rail, the detection indexes of the surface defects of the polished steel rail are specifically as follows: whether there is a transverse polishing track or not and whether there is a step between the polished surface and a steel rail base material or not. The present invention further provides a method for inspecting steel rail surface defects by using the detection device or the detection system.

As shown in FIGS.4 to 6, in some embodiments, a method for inspecting surface defect of a steel rail through the camera 1 and a light source group is provided. The method comprises the following steps: taking one camera 1 and a plurality of light sources configured for the camera 1 as a detection unit, wherein the light sources are sequentially lightened when the same detection unit performs a shooting task, the camera 1 shoots an image of an to-be-inspected object once when the light sources are lightened once, and only one light source is lightened when the camera 1 shoots the image once; acquiring a plurality of images of the to-be-inspected object in each shooting task, wherein each image of the to-be-inspected object corresponds to an image which has object information and illumination information when one light source illuminates the to-be-inspected object; and fusing spatial information and inter-frame information of the images of the to-be-inspected object to reconstruct a normal map of the surface of the to-be-inspected object, searching a position meeting a gradient change characteristic threshold in the normal map, and marking the position as a defect. Therefore, a step defect between a polished surface and a steel rail base material can be inspected. The spatial information and the inter-frame information of the images of the to-be-inspected object are fused to obtain the normal map of the surface of the to-be-inspected object, so that the interference of a pseudo defect caused by highlight, chromatic aberration, etc. of the polished surface can be removed, and only a real processing defect is reserved in the normal map. The structure of the detection unit adopts the structure of the detection device. The normal map is obtained by adopting the data processing system.

In some embodiments, lines are extracted from the normal map, whether the line direction is parallel to the steel rail length direction or perpendicular to the steel rail length direction is judged, and if the lines perpendicular to the steel rail length direction appear, the lines are marked as defects. On a long rail production line, the length direction of the steel rail is determined. Therefore, the length direction of the steel rail can be used as a judgment reference. Therefore, the transverse grinding trace of the steel rail can be identified.

In some embodiments, before the normal map of the to-be-inspected object is obtained, threshold segmentation is carried out on the image of the to-be-inspected object, the image area smaller than the set threshold is removed, and inter-frame information extraction and spatial information extraction are only carried out on the remaining area.

A solution that a smoke collecting hood serves as a to-be-inspected workpiece, and the machine vision detection device is applied to a smoke collecting hood production line of a range hood is adopted.

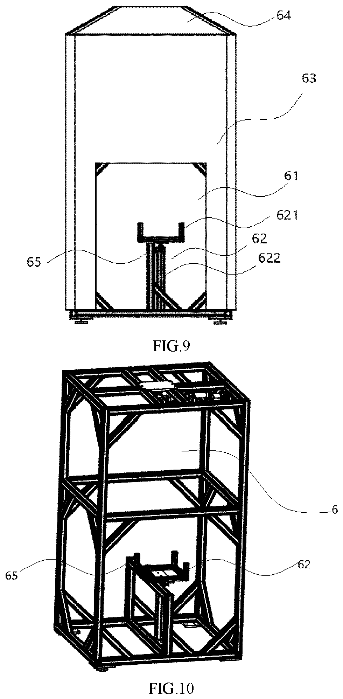

As shown in FIGS. 9 and 10, an automatic machine vision detection station used on the smoke collecting hood production line is provided wherein the machine vision detection station is arranged behind a smoke collecting stove stamping station, and the stamping station and the machine vision detection station convey materials through a feeding and discharging manipulator; the machine vision detection station comprises a detection chamber 6 and an detection system positioned in the detection chamber, wherein the detection chamber is provided with a feeding port 61, a material bracket 62 is arranged in the detection chamber, and the material bracket 62 is positioned in an area covered by the feeding port 61 from the front view direction; the detection system is positioned above the material bracket 62, side light shielding plates 63 are arranged above the feeding port 61, and the detection system is surrounded by the side light shielding plates 63; a top light shielding plate 64 is arranged at the top of the detection chamber, and the top light shielding plate 64 and the side light shielding plates 63 form a dark chamber in a surrounding mode; and the detection system comprises the abovementioned detection device.

The material bracket 62 comprises a material supporting frame 621 and a lifting assembly 622, wherein the lifting assembly 622 comprises a fixed part and a moving part, and the moving part is fixed with the material supporting frame. For example, the lifting assembly is an electric push rod, an air cylinder, etc.

In some embodiments, as shown in FIG.9, a lowest limiting piece 65 is arranged beside the material supporting frame 621. The number of the lowest limiting piece can be one, or two lowest limiting pieces can be symmetrically arranged, and the distance between the two lowest limiting pieces is smaller than the width of the to-be-inspected workpiece; and the width of the material supporting frame is smaller than the distance between the two lowest limiting pieces.

In some embodiments for inspecting the smoke collecting hood, the manipulator comprises a mechanical arm and a feeding tail end, the feeding tail end acquires the to-be-inspected workpiece from a stamping line at a first position and reaches a second position after rotating by 180 degrees, and the mechanical arm enters the feeding port when the feeding tail end is located in the second position; and when the moving part of the lifting assembly is located in the lowest position, the distance between the top surface of each lowest limiting piece and the top surface of the material supporting frame is larger than the height of the feeding tail end.

When the moving part of the lifting assembly is located in the highest position, the distance between the top surface of the material supporting frame and the light source of the detection device is larger than 5 times of the view field of the camera of the detection device.

In some embodiments of inspecting the smoke collecting hood, the to-be-inspected workpiece comprises a first detection area and a second detection area, the first detection area comprises a top surface, a bottom surface and connecting surfaces, the connecting surfaces are four inclined surfaces, and the top surface is parallel to the bottom surface; the second detection area is a folded edge perpendicular to the top surface; and the first detection device takes the first detection area as an detection object, and the second detection device takes the second detection area as a detection object.

The present invention provides a data processing system for reconstructing three-dimensional surface information of a to-be-inspected workpiece by using a plurality of images illuminated from different angles.

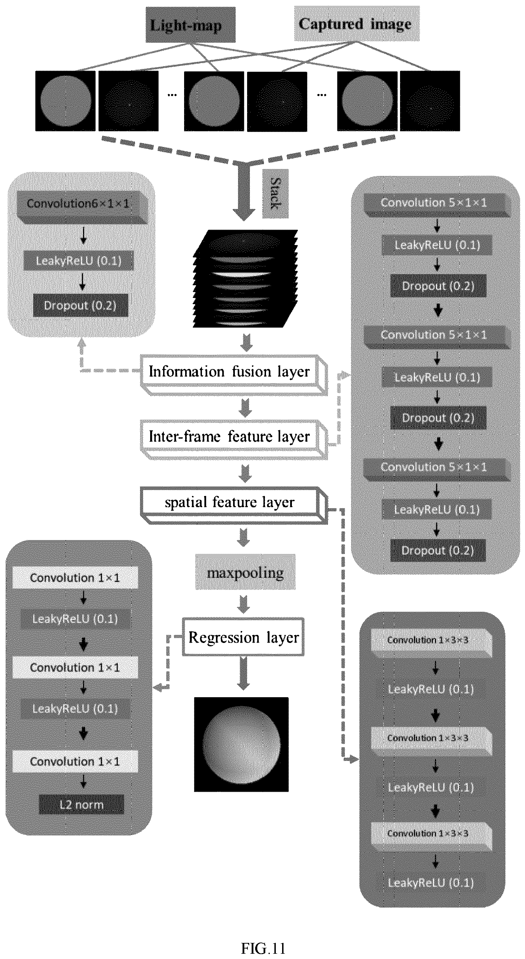

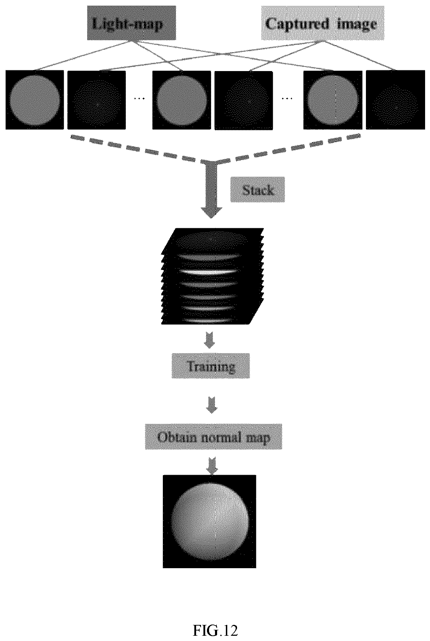

In some embodiments, a data processing system comprises a data processor, a graphic processor and a data memory, wherein the data processor reads images from a data memory and inputs the images into the graphic processor; an image recognition network is preset in the graphic processor; as shown in FIGS. 11 and 12, the image recognition network comprises image input, a feature extractor for acquiring effective features of the input images, a maximum pooling layer and a normal regression unit. The images are input into an initial fusion module; the initial fusion module enables the current images to be in one-to-one correspondence with illumination information of the current images; the images fused with the illumination information and output by the initial fusion module are input into the feature extractor; the feature extractor comprises an inter-frame information extractor and a spatial information extractor; the inter-frame information extractor and the spatial information extractor both use a three-dimensional convolution kernel; inter-frame information occupies one dimension, and spatial information occupies two dimensions; the input of the inter-frame information extractor is the output of the initial fusion module, and the input of the spatial information extractor is the output of the inter-frame information extractor; and the output of the spatial information extractor is used as the input of the maximum pooling layer.

A normal regression unit performs convolution operation on the output of a maximum pooling layer, and then performs L2 regularization, and the result of the regularization output is a normal map. In some embodiments, the last convolution operation of the normal regression unit uses 3 channels. In some embodiments, other convolution operations of the image recognition network use 128 channels.

As shown in FIGS. 11 and 12, in some embodiments, spatial information and inter-frame information in an image of the to-be-inspected object are extracted, the spatial information and the inter-frame information are respectively represented by three-dimensional convolution, the three-dimensional convolution comprises a two-dimensional spatial dimension and a one-dimensional inter-frame dimension, the value of the one-dimensional inter-frame dimension in the three-dimensional convolution of the spatial information is a set value, the two-dimensional spatial dimension is a spatial information value of the image, the value of the two-dimensional spatial dimension in the three-dimensional convolution of the inter-frame information is a set value, and the one-dimensional inter-frame dimension is an inter-frame information value; and when image information fusion is carried out, the inter-frame information is processed firstly, then the spatial information is processed, and then the inter-frame information and the spatial information are fused to obtain a three-dimensional image of the surface texture of the to-be-inspected object.

In some embodiments, the step of fusing the spatial information and the inter-frame information of the image of the object to be measured comprises the following steps:

Establishing a formula of an information fusion module: $F_0 = \mathcal{F}_{dropout}(\sigma(Con_{6\times1\times1}(IL_{input})))$ ; Wherein, $IL_{input}$ represents the input of the formula; $IL_{input}$ includes each image and light source intensity obtained by each shooting task, and light source direction; $F_0$ represents the output of the formula; $Con_{6\times1\times1}$ represents a convolution kernel with a size of $6 \times 1 \times 1$ ; $Con_{6\times1\times1}(IL_{input})$ represents a convolution operation on $IL_{input}$ ; $\sigma$ represents a leaky Relu activation function; $\sigma(Con_{6\times1\times1}(IL_{input}))$ represents an activation operation on $Con_{6\times1\times1}(IL_{input})$. $\mathcal{F}_{dropout}$ represents a dropout operation; $\mathcal{F}_{dropout}(\sigma(Con_{6\times1\times1}(IL_{input})))$ represents a dropout operation on $\sigma(Con_{6\times1\times1}(IL_{input}))$. Convolution operation, activation operation and dropout operation belong to conventional functions or conventional operations of deep learning.

Each image has R, G and B channels, a light source information graph of each image during shooting needs X, Y and Z coordinate values for representation, and a value in each coordinate direction is stored in one channel; and three-channel information of each image, three-channel information of the corresponding light source information graph are operated through a $6 \times 1 \times 1$ convolution kernel, therefore, the image and the corresponding light source information are fused, and the one-to-one correspondence relationship is prevented from being disturbed by subsequent operation.

In some embodiments, inter-frame information extraction is carried out by using an *IRFE* (inter-frame information extractor), *IRFE* is composed of a convolution kernel with the size of $5 \times 1 \times 1$, a leaky Relu activation function and a dropout layer: $IRFE^i(\cdot) = \mathcal{F}_{dropout}(\sigma(Con^i_{5\times1\times1}(\cdot)))$ , wherein ■ represents the input of the inter-frame information extractor, $Con^i_{5\times1\times1}(\cdot)$ represents that i times of convolution is carried out on the input, and the size of the convolution kernel is $5 \times 1 \times 1$; and $\sigma(Con^i_{5\times1\times1}(\cdot))$ represents that an activation operation on $Con^i_{5\times1\times1}(\cdot)$ , and $\mathcal{F}_{dropout}(\sigma(Con^i_{5\times1\times1}(\cdot)))$ represents that a dropout operation on $\sigma(Con^i_{5\times1\times1}(\cdot))$ .

In some embodiments, the step of extracting inter-frame information by using *IRFE* is as follows: The initial input · of the *IRFE* is set as $F_0$,

$$F^1_{IRF} = IRFE^1(F_0) \qquad (3)$$
$$F^2_{IRF} = IRFE^2(F^1_{IRF}) \qquad (4)$$
$$\vdots$$
$$F^K_{IRF} = IRFE^K(F^{K-1}_{IRF}); \qquad (5)$$

Wherein, $F_0$ represents the output of an information fusion module formula; $F^1_{IRF}$ represents the output of a first inter-frame information extractor, and $IRFE^1(F_0)$ represents that the first inter-frame information extractor takes $F_0$ as the input; K is the number of the *IRFE*, $F^K_{IRF}$ represents the output of the Kth inter-frame information extractor, and $IRFE^K(F^{K-1}_{IRF})$ represents that the Kth inter-frame information extractor takes the output of the (K-1)th inter-frame information extractor as the input. In this embodiment, K=3.

In some embodiments, the spatial information extraction is carried out by using *IAFE* (spatial information extractor), wherein the *IAFE* is composed of a convolution kernel with the size of $1 \times 3 \times 3$; and a leaky Relu activation function is: $IAFE^i(\cdot) = \sigma(Con^i_{1\times3\times3}(\cdot))$ , wherein · represents the input of the spatial information extractor, $Con^i_{1\times3\times3}(\cdot)$ represents that i times of convolution is carried out on the input, the size of the convolution kernel is 1

$\times 3 \times 3$, and $\sigma(Con_{1\times3\times3}^{i}(\cdot))$ represents that $Con_{1\times3\times3}^{i}(\cdot)$ is activated.

Further, the initial input of the *IAFE* is set as $F_{IRF}^{K}$,

$$F_{IAF}^{1} = IAFE^{1}(F_{IRF}^{K}) \qquad (6)$$

$$F_{IAF}^{2} = IAFE^{2}(F_{IRF}^{1}) \qquad (7)$$

$$\vdots$$

$$F_{IAF}^{L} = IAFE^{L}(F_{IRF}^{L-1}), \qquad (8)$$

Wherein, $F_{IAF}^{1}$ represents the output of the first spatial information extractor, $F_{IRF}^{K}$ represents the input of the first spatial information extractor, $F_{IAF}^{L}$ represents the output of the L$^{th}$ spatial information extractor, and $IAFE^{L}(F_{IRF}^{L-1})$ represents that the output of the (L-1)$^{th}$ spatial information extractor is taken as the input of the L$^{th}$ spatial information extractor. In this embodiment, L=3.

In some embodiments, $F_{IAF}^{L}$ is used as the input of maximum pooling, $F_{MAX} = MP(F_{IAF}^{L})$, (9), MP represents maximum pooling max-pooling operation, and $F_{MAX}$ represents the output of maximum pooling. The operation of this step extracts the most significant information between different channels, and also fixes an input channel for the subsequent operation.

Further, $F_{MAX}$ is used as the input to perform normal vector solving:

$$N_{ij} = NME(F_{MAX}),$$

$$= L_{norm}^{2}(\sigma(Con_{1\times1}(\sigma(Con_{1\times1}(\sigma(Con_{1\times1}(F_{MAX}))))))), (10)$$

Wherein, $Con_{1\times1}$ represents convolution with a size of $1 \times 1$, $Con_{1\times1}(F_{MAX})$ represents convolution operation on $F_{MAX}$, the size of the convolution kernel is $1 \times 1$, $\sigma$ represents a leaky Relu activation function, and $L_{norm}^{2}$ represents L2 regularization; $N_{ij}$ represents the normal vector of a point with a pixel coordinate of (i, j), and the normal map formed by the normal vectors of all pixels of the whole image represents the surface three-dimensional information of the to-be-inspected object.

As shown in FIG.11, the present invention discloses a three-dimensional convolution-based non-Lambertian surface three-dimensional model. The non-Lambert surface light degree three-dimensional model comprises an information fusion layer, inter-frame information extraction, spatial information extraction, a maximum pooling layer and a regression layer, wherein the regression layer is a normal regression unit.

The information fusion layer is used for fusing each image and corresponding light source information to ensure the one-to-one correspondence of the image and the light source in the subsequent processing; The inter-frame information extraction is used for extracting inter-frame information and obtaining information between input image frames for estimating a normal image;

The spatial information extraction is used for extracting structure information inside a single image for recovering the normal image; and

The maximum pooling layer is used for reducing dimensions, removing redundant information, compressing features, simplifying the network complexity, reducing the calculation quantity and reducing the memory consumption.

The information fusion layer comprises a three-dimensional convolution layer C1, a LeakyReLU activation function is arranged behind the three-dimensional convolution layer C1, and the ratio of the output value dropout of the LeakyReLU activation function is 0.2.

The inter-frame information extraction comprises three-dimensional convolution layers, namely, a three-dimensional convolution layer C2, a three-dimensional convolution layer C3 and a three-dimensional convolution layer C4 respectively, a LeakyReLU activation function is arranged behind each three-dimensional convolution layer, and the ratio of the output value dropout of each LeakyReLU activation function is 0.2.

The spatial information extraction comprises three-dimensional convolution layers, namely, a three-dimensional convolution layer C5, a three-dimensional convolution layer 6 and a three-dimensional convolution layer C7 respectively, and a LeakyReLU activation function is arranged behind each three-dimensional convolution layer.

The regression layer comprises three two-dimensional convolution layers which are the two-dimensional convolution layer C8, the two-dimensional convolution layer C9 and the two-dimensional convolution layer C10 respectively, a LeakyReLU activation function is arranged behind the two-dimensional convolution layer C8 and the two-dimensional convolution layer C9, and an L2 normalization regularization function is arranged behind the two-dimensional convolution layer C10.

As shown in FIG.3, a method for recovering the normal map of the to-be-inspected object during quantitative measurement is as follows: the method is realized through a deep learning network, and the deep learning network comprises an information fusion layer, inter-frame information extraction, spatial information extraction, a maximum pooling layer and a regression layer;

The inter-frame information extraction layer comprises three-dimensional convolution layers, namely a three-dimensional convolution layer C2, a three-dimensional convolution layer C3 and a three-dimensional convolution layer C4; a LeakyReLU activation function is arranged behind each three-dimensional convolution layer; the dropout ratio of the output value of each LeakyReLU activation function is 0.2; and the three-dimensional convolution layer C2, the three-dimensional convolution layer C3 and the three-dimensional convolution layer C4 comprise M1 *1 feature maps.

The spatial information extraction comprises three-dimensional convolution layers, namely a three-dimensional convolution layer C5, a three-dimensional convolution layer 6 and a three-dimensional convolution layer C7, wherein each three-dimensional convolution layer is followed by a LeakyReLU activation function; the three-dimensional convolution layer C5, the three-dimensional convolution layer 6 and the three-dimensional convolution layer C7 comprise one N * N feature maps;

In the image processing process, inter-frame information extraction processing is performed firstly, and then spatial information extraction processing is performed;

Wherein, in Example 1, M =1, and N =3;

In Example 2, M =3, and N =3;

In Example 3, M =5, and N =3; and

In Example 4, M =7, and N =3.

Specific Examples 5 to 7:

As shown in FIG.11, a three-dimensional convolution-based non-Lambertian surface three-dimensional model comprises an information fusion layer, inter-frame information extraction, spatial information extraction, a maximum pooling layer and a regression layer.

The inter-frame information extraction layer comprises three-dimensional convolution layers, namely a three-dimensional convolution layer C2, a three-dimensional convolution layer C3 and a three-dimensional convolution layer C4; a LeakyReLU activation function is arranged behind each three-dimensional convolution layer; the dropout ratio of the output value of each LeakyReLU activation function is 0.2; and the three-dimensional convolution layer C2, the three-dimensional convolution layer C3 and the three-dimensional convolution layer C4 comprise M1 *1 feature maps;

The spatial information extraction comprises three-dimensional convolution layers, namely a three-dimensional convolution layer C5, a three-dimensional convolution layer 6 and a three-dimensional convolution layer C7, wherein each three-dimensional convolution layer is followed by a LeakyReLU activation function; the three-dimensional convolution layer C5, the three-dimensional convolution layer 6 and the three-dimensional convolution layer C7 comprise one N * N feature maps;

In the image processing process, inter-frame information extraction processing is performed firstly, and then spatial information extraction processing is performed;

Wherein, in Example 5, M =5, and N =1;

In Example 6, M =5, and N =3;

In Example 7, M =5, and N =5;

The convolution data analysis results of Examples 1 to 8 are tested specific to images of different shapes; and obtained data is shown in Table 1.

Table 1 Test result of convolution kernels with different sizes on DiLiGenT data set

| Convolution kernel size | | BALL | CAT | PO T1 | BEAR | PO T2 | BUDD. | GO BL. | READ. | COW | HARV. | Avg. |
|---|---|---|---|---|---|---|---|---|---|---|---|---|
| N = 3 | M = 1 | 2.97 | 6.23 | 7.90 | 7.13 | 10.24 | 8.23 | 9.30 | 13.37 | 10.01 | 15.80 | 9.12 |
| | M = 3 | 2.82 | 5.95 | 6.91 | 5.46 | 8.10 | 7.05 | 8.38 | 11.85 | 8.16 | 14.09 | 7.88 |
| | M = 5 | 2.29 | 5.87 | 6.92 | 5.79 | 6.89 | 6.85 | 7.88 | 11.94 | 7.48 | 13.71 | 7.56 |
| | M = 7 | 2.21 | 5.46 | 6.53 | 5.62 | 7.42 | 6.99 | 7.86 | 12.56 | 7.30 | 13.93 | 7.59 |
| M = 5 | N = 1 | 2.80 | 5.63 | 6.74 | 6.94 | 9.23 | 7.42 | 10,28 | 12.51 | 12.32 | 15,22 | 8.91 |
| | N = 3 | 2.29 | 5.87 | 6.92 | 5.79 | 6.89 | 6.85 | 7.88 | 11.94 | 7.48 | 13.71 | 7.56 |
| | N = 5 | 2.30 | 6.57 | 7.16 | 5.11 | 7.97 | 7.13 | 8.24 | 12.51 | 7.45 | 13.60 | 7.80 |

In Table 1, the first row represents the name of a sample, the first rank represents the size of the convolution kernel, and the intermediate value represents an average angle error; the influence of different convolution kernel sizes on the network structure can be seen from Table 1; N represents the size of the convolution kernel of the inter-frame extractor, and M identifies the size of the convolution kernel of the spatial extractor; and by referring to the average angle error value of each example and integrating the factors such as the effect and the model size, the size of the convolution kernel of the inter-frame extractor is finally selected to be 5, and the size of the convolution kernel of the spatial extractor is selected to be 3.

A model is established according to convolution layer data that the size of the convolution kernel of the selected inter-frame extractor is 5 and the size of the convolution kernel of the spatial extractor is 3, the model is compared with other models, the images in different shapes are tested on a DiLiGenT data set, and the result is shown in Table 2.

Table 2 Test result of different methods on DiLiGenT data set

| This model | BALL | CAT | POT1 | BEAR | POT2 | BUDD. | GOBL. | READ. | COW | HARV. | Avg. |
|---|---|---|---|---|---|---|---|---|---|---|---|
| | 2.29 | 5.87 | 6.92 | 5.79 | 6.89 | 6.85 | 7.88 | 11.94 | 7.48 | 13.71 | 7.56 |
| CNN -PS18 | 2.20 | 4.60 | 5.40 | 12.30 | 6.00 | 7.90 | 7.30 | 12.60 | 7.90 | 13.90 | 8.01 |
| PS-FCN 18 | 2.82 | 6.16 | 7.13 | 7.55 | 7.25 | 7.91 | 8.60 | 13.33 | 7.33 | 15.85 | 8.39 |
| TM 18 | 1.47 | 5.44 | 6.09 | 5.79 | 7.76 | 10.36 | 11.47 | 11.03 | 6.32 | 22.59 | 8.83 |
| DPSN 17 | 2.02 | 6.54 | 7.05 | 6.31 | 7.86 | 12.68 | 11.28 | 15.51 | 8.01 | 16.86 | 9.41 |
| ST14 | 1.74 | 6.12 | 6.51 | 6.12 | 8.78 | 10.60 | 10.09 | 13.63 | 13.93 | 25.44 | 10.30 |
| JA14 | 3.34 | 6.74 | 6.64 | 7.11 | 8.77 | 10.47 | 9.71 | 14.19 | 13.05 | 25.95 | 10.60 |
| L2 | 4.10 | 8.41 | 8.89 | 8.39 | 14.65 | 14.92 | 18.50 | 19.80 | 25.60 | 30.62 | 15.39 |

The first row in the Table 2 represents the name of the sample, the first rank represents the name of the method, and the middle value represents the average angle error; the table is the transverse pair of this model and the current advanced method, wherein CNN-PS18, PS-FCN18, TM18 and DPSN17 are all methods based on deep learning; the rest of methods are all methods based on traditional mathematical analysis, and it can be seen that the provided model is greatly improved compared with a traditional method and a method based on deep learning according to the average angle error value.

A model is established according to convolution layer data that the size of the convolution kernel of the selected inter-frame extractor is 5 and the size of the convolution kernel of the spatial extractor is 3, the model is compared with other models, the test result of different sparse input luminosity three-dimensional methods on DiLiGenT data set is shown in Table 3.

Table 3 Test result of different sparse input luminosity three-dimensional methods on DiLiGenT data set

| This model | 96 | 16 | 10 | 8 | 6 |
|---|---|---|---|---|---|
| | **7.56** | **8.82** | **9.84** | 10.75 | 12.30 |
| JU-19 | 8.43 | 9.66 | 10.02 | **10.39** | **12.16** |

(continued)

| This model | 96 | 16 | 10 | 8 | 6 |
|---|---|---|---|---|---|
| | **7.56** | **8.82** | **9.84** | 10.75 | 12.30 |
| CH-18 | 8.39 | 9.37 | 10.33 | 11.13 | 12.56 |
| SI-18 | 7.20 | 10.49 | 14.34 | 19.50 | 30.28 |
| IK-12 | 14.08 | 15.47 | 16.37 | 16.84 | 18.45 |
| BASELINE | 15.39 | 16.65 | 17.31 | 17.47 | 18.60 |

In Table 3, the first row represents the input image, the first rank represents the name of the model, and the middle value represents an average angle error; the table is a transverse comparison between the model and a current advanced sparse input luminosity three-dimensional method, wherein JU-19, CH-18 and SI-18 are all based on a deep learning method, and JU-19 and CH-18 have specific structures for the problem of sparse input, and other methods are traditional methods; and it can be seen from the Table 3 that the model of the present invention has no complex structure for sparse input, and a good effect can be achieved when 16 and 10 pictures are input only by using the inter-frame spatial extractor to improve the information utilization rate.

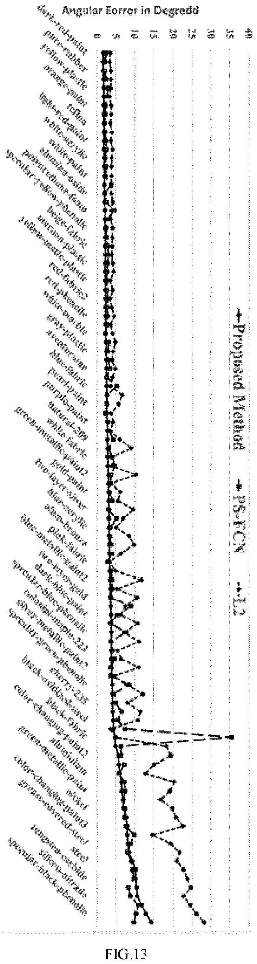

A model is established according to convolution layer data that the size of the convolution kernel of the selected inter-frame extractor is 5 and the size of the convolution kernel of the spatial extractor is 3; an image processed by a luminosity three-dimensional method of the model and an image processed by a PS-FCN model three-dimensional method are compared based on the MERL data set image rendering result, and the comparison result is shown as a FIG.13. As shown in the FIG.13, compared with a PS-FCN, the model has relatively higher image processing stability and higher accuracy.

In conclusion, the automatic steel rail detection system has higher normal vector recovery accuracy; spatial information has a very good information compensation effect on high light spots and shadow regions; the robustness of an algorithm on abnormal regions can be enhanced by adding the spatial information; and the model has higher normal vector recovery accuracy while keeping a high operation speed, and has a better industrial application prospect.

Each of the examples of the present invention can be taken as an independent technical solution, and the examples can be combined with one another to form a combined solution.

It should be understood that the described embodiments of the present invention are some preferred embodiments and features. The scope of the invention is defined by the appended claims.

**Claims**

1. An automatic machine of vision detection device for a workpiece with a complex curved surface, wherein the device is provided with at least one defect detection unit, the defect detection unit comprises a camera (1), light sources (2) and an detection unit bracket (3); the camera (1) and the light sources (2) are arranged on the detection unit bracket (3); wherein one camera (1) and a plurality of light sources (2) configured for the camera (1) are used as one detection unit, the distance between a light source and a to-be-inspected workpiece is five times greater than a shooting field of view of the camera (1); when the same detection unit performs a shooting task, the light sources (2) are configured to be sequentially lightened; when a light source (2) is lightened once, the camera (1) is configured to shoot an image of the to-be-inspected object once; each time when the camera (1) shoots, only one light source (2) is configured to be lightened; and the strongest illumination areas of the light sources in the same detection unit on the to-be-inspected object are not overlapped with one another;

   the automatic machine of vision detection device further comprises a data processing system comprising a data processor, a graphic processor and a data memory, wherein the data processor is configured to read images from the data memory and input the images into the graphic processor;
   the data processing system is configured to reconstruct three-dimensional surface information of a to-be-inspected workpiece by using a plurality of images illuminated from different angles,
   **characterized in that**
   an image recognition network is preset in the graphic processor; the image recognition network comprises an image input unit, a feature extractor for acquiring effective features of the input images, a maximum pooling layer and a normal regression unit;
   wherein

the image input unit is configured to input the images into an initial fusion module;

the initial fusion module is configured to enable the images to be in one-to-one correspondence with illumination information of the images;

the initial fusion module is configured to output the images fused with the illumination information to the feature extractor;

the feature extractor comprises an inter-frame information extractor and a spatial information extractor; the inter-frame information extractor and the spatial information extractor are configured to use a three-dimensional convolution kernel, wherein the inter-frame information occupies one dimension, and the spatial information occupies two dimensions;

an output of the initial fusion module is an input of the inter-frame information extractor, and an output of the inter-frame information extractor is an input of the spatial information extractor; and an output of the spatial information extractor is an input of the maximum pooling layer;

the normal regression unit is configured to perform convolution operation on an output of the maximum pooling layer, and then to perform L2 regularization, wherein a result of the regularization is a normal map, and the normal map formed by normal vectors of all pixels represents the three-dimensional surface information of the to-be-inspected workpiece.

2. The automatic machine of vision detection device according to claim 1, wherein the detection unit bracket (3) is circular, and the circle center of the detection unit bracket (3) is positioned in a mounting area of the camera (1); the surface of the detection unit bracket is taken as a reference surface, and on the reference plane, each light source in one group of light sources (2) has an equal projection distance from the camera (1).

3. The automatic machine of vision detection device according to claim 1, wherein the detection unit bracket (3) is polygonal, and the detection unit bracket is formed by assembling rectangular pipes (31) and a triangular connecting piece (32) through fasteners, and the rectangular pipes (31) form a framework of the detection unit bracket (3); the triangular connecting piece (32) is arranged between the connecting parts of the two rectangular pipes (31), one mounting edge (321) of the triangular connecting piece is in contact with one rectangular pipe (31) fitting and is fixed by the fastener, and the second mounting edge (322) of the triangular connecting piece is in contact with the other rectangular pipe (31) fitting and is fixed by the fastener, and an included angle formed after the two rectangular pipes (31) are connected is equal to an included angle formed by the two mounting edges (321, 322) of the triangular connecting piece.

4. The automatic machine of vision detection device according to claim 3, wherein relays (33) are fixedly mounted on the rectangular pipes (31), each light source (2) corresponds to one relay (33), a wire (34) is arranged between each relay (33) and the corresponding light source (2), one end of each wire (34) is fixed with a wiring end of the corresponding relay (33), and the other end of each wire (34) is fixed with a wiring end of the corresponding light source (2); and each wire (34) extends from an output end of the corresponding relay (33), firstly extends in an outer direction away from the rectangular pipe (31), and then extend in an inner direction close to the rectangular pipe (31), thus, stable electric connection between the light sources and the relays can be guaranteed.

5. The automatic machine of vision detection device according to claim 4, wherein signal input wires (35) are arranged at input ends of the relays (33), each signal input wire (35) is led out from the input end of the corresponding relay (33), extends forwards and then extends backwards; wherein the input end of the relay (33) is taken as the front, and the output end of the relay (33) is taken as the rear.

6. The automatic machine of vision detection device according to any of claims 1 to 5, wherein each light source (2) is arranged on a light source bracket (21), the light source bracket (21) comprises a hanging lug (211) and a hanging piece (212), the hanging lug (211) is fixed to the detection unit bracket (3), the light source (2) is fixed on the hanging piece (212), the hanging piece (212) is parallel to the light source bracket (21), the hanging piece (212) is rotatably connected with the hanging lug (211); and damping exists between the hanging piece (212) and the hanging lug (211).

7. The automatic machine of vision detection device according to claim 6, wherein the rotation range between the hanging piece (212) and the hanging lug (211) is ±10°.

8. The automatic machine of vision detection device according to claim 7, wherein the hanging lug (211) is provided with a lug part extending towards a direction far away from the detection unit bracket (3), the hanging piece (212) is provided with a beam and a connecting part extending towards a direction close to the detection unit bracket, the light source (2) is fixed on the beam; the connecting part is overlapped with the lug part, a light source rotating shaft

(213) is arranged between the connecting part and the corresponding lug part, and the light source rotating shaft (213) is fixed with the connecting part or is fixed with the lug part.

9.  The automatic machine of vision detection device according to claim 8, wherein the light source rotating shaft (213) is fixed with the connecting part and is connected with an output shaft of a light source driving motor.

10. The automatic machine of vision detection device according to any of claims 1 to 9, wherein the camera (1) is taken as a center, any plane perpendicular to the axis of the camera is taken as a reference plane, the light sources (2) are grouped according to the distance between the light sources and the camera, wherein the light sources (2) in the same group have the same distance from the camera, and the distance between the camera (1) and one of the light sources (2) in different groups is random.

11. The automatic machine of vision detection device according to any of claims 1 to 10, wherein the light sources (2) are controlled by a controller, a lighting rule of the light sources is preset in the controller, each light source has a unique light source code, and a camera has a unique camera code; the lighting rule comprises correspondence between the camera codes and the light source codes, and a lighting sequence of the light sources.

12. An automatic vision detection system for surface quality of a steel rail comprising the automatic machine of vision detection device of any of claims 1 to 11.

13. The automatic vision detection system for surface quality of a steel rail according to claim 12, wherein the steel rail detection system is provided with a frame (4), the automatic detection device is arranged in the frame, the frame (4) is provided with side plates and a top plate, the side plates and the top plate enclose the interior of the frame to form a dark room, wherein one side plate is provided with an inlet for allowing the steel rail to enter, and one opposite side plate is provided with an outlet for allowing the steel rail to be output; the side plates are provided with doors or beds, or the side plates are detachably connected with the frame.

14. The automatic vision detection system for surface quality of a steel rail according to claim 13, wherein there are four groups of detection devices (41, 42, 43, 44), each group corresponds to an detection area of the steel rail, the detection devices enclose an detection area, and the steel rail enters the detection area along the axial direction; and the distance between two opposite detection devices is not less than 1,050 mm.

**Patentansprüche**

1.  Automatische Maschinensichtdetektionsvorrichtung für ein Werkstück mit einer komplexen gekrümmten Oberfläche, wobei die Vorrichtung mit mindestens einer Fehlerdetektionseinheit versehen ist, wobei die Fehlerdetektionseinheit eine Kamera (1), Lichtquellen (2) und eine Detektionseinheitshalterung (3) umfasst, die Kamera (1) und die Lichtquellen (2) an der Detektionseinheitshalterung (3) angeordnet sind; wobei eine Kamera (1) und eine Vielzahl von Lichtquellen (2), die für die Kamera (1) konfiguriert sind, als eine Detektionseinheit verwendet werden, wobei der Abstand zwischen einer Lichtquelle und einem zu untersuchenden Werkstück fünfmal größer als ein Aufnahmesichtfeld der Kamera (1) ist; wenn die gleiche Detektionseinheit eine Aufnahmeaufgabe durchführt, die Lichtquellen (2) dazu konfiguriert sind, nacheinander erleuchtet zu werden, wenn eine Lichtquelle (2) einmal erleuchtet wird, die Kamera (1) dazu konfiguriert ist, einmal ein Bild des zu untersuchenden Objekts aufzunehmen; jedes Mal, wenn die Kamera (1) aufnimmt, nur eine Lichtquelle (2) dazu konfiguriert ist, erleuchtet zu werden, und sich die stärksten Beleuchtungsbereiche der Lichtquellen in der gleichen Detektionseinheit auf dem zu untersuchenden Objekt nicht gegenseitig überlappen;

    die automatische Maschinensichtdetektionsvorrichtung ferner ein Datenverarbeitungssystem umfasst, das einen Datenprozessor, einen Grafikprozessor und einen Datenspeicher umfasst, wobei der Datenprozessor dazu konfiguriert ist, Bilder aus dem Datenspeicher zu lesen und die Bilder in den Grafikprozessor einzugeben; das Datenverarbeitungssystem dazu konfiguriert ist, dreidimensionale Oberflächeninformationen eines zu untersuchenden Werkstücks unter Verwendung einer Vielzahl von Bildern zu rekonstruieren, die aus verschiedenen Winkeln beleuchtet werden, **dadurch gekennzeichnet, dass** ein Bilderkennungsnetzwerk in dem Grafikprozessor voreingestellt ist; das Bilderkennungsnetzwerk eine Bildeingabeeinheit, einen Merkmalsextraktor zum Erfassen effektiver Merkmale der Eingabebilder, eine Maximum-Pooling-Schicht und eine Normalregressionseinheit umfasst, wobei

die Bildeingabeeinheit dazu konfiguriert ist, die Bilder in ein Initialfusionsmodul einzugeben;

das Initialfusionsmodul dazu konfiguriert ist, zu ermöglichen, dass die Bilder in einer Einszu-eins-Entsprechung mit Beleuchtungsinformationen der Bilder stehen;

das Initialfusionsmodul dazu konfiguriert ist, die mit den Beleuchtungsinformationen fusionierten Bilder an den Merkmalsextraktor auszugeben;

der Merkmalsextraktor einen Interframe-Informationsextraktor und einen Rauminformationsextraktor umfasst, der Interframe-Informationsextraktor und der Rauminformationsextraktor dazu konfiguriert sind, einen dreidimensionalen Faltungskern zu verwenden, wobei die Interframe-Informationen eine Dimension einnehmen und die Rauminformationen zwei Dimensionen einnehmen;

eine Ausgabe des Initialfusionsmoduls eine Eingabe des Interframe-Informationsextraktors ist und eine Ausgabe des Interframe-Informationsextraktors eine Eingabe des Rauminformationsextraktors ist; und eine Ausgabe des Rauminformationsextraktors eine Eingabe der Maximum-Pooling-Schicht ist;

die Normalregressionseinheit dazu konfiguriert ist, eine Faltungsoperation an einer Ausgabe der Maximum-Pooling-Schicht durchzuführen und dann eine L2-Regularisierung durchzuführen, wobei ein Ergebnis der Regularisierung eine Normalenkarte ist und die Normalenkarte, die durch Normalenvektoren aller Pixel gebildet wird, die dreidimensionale Oberflächeninformationen des zu untersuchenden Werkstücks darstellt.

2. Automatische Maschinensichtdetektionsvorrichtung nach Anspruch 1, wobei die Detektionseinheitshalterung (3) kreisförmig ist und der Kreismittelpunkt der Detektionseinheitshalterung (3) in einem Montagebereich der Kamera (1) positioniert ist; die Oberfläche der Detektionseinheitshalterung als eine Referenzoberfläche herangezogen wird und auf der Referenzebene jede Lichtquelle in einer Gruppe von Lichtquellen (2) einen gleichen Projektionsabstand von der Kamera (1) aufweist.

3. Automatische Maschinensichtdetektionsvorrichtung nach Anspruch 1, wobei die Detektionseinheitshalterung (3) polygonal ist und die Detektionseinheitshalterung durch Zusammenfügen von rechteckigen Rohren (31) und einem dreieckigen Verbindungsstück (32) durch Befestigungselemente gebildet ist und die rechteckigen Rohre (31) ein Gerüst der Detektionseinheitshalterung (3) bilden; das dreieckige Verbindungsstück (32) zwischen den Verbindungsteilen der zwei rechteckigen Rohre (31) angeordnet ist, wobei eine Montagekante (321) des dreieckigen Verbindungsstücks in Kontakt mit einem Anschluss des rechteckigen Rohrs (31) ist und durch das Befestigungselement fixiert wird und die zweite Montagekante (322) des dreieckigen Verbindungsstücks in Kontakt mit dem anderen Anschluss des rechteckigen Rohrs (31) ist und durch das Befestigungselement fixiert wird, und ein eingeschlossener Winkel, der nach dem Verbinden der zwei rechteckigen Rohre (31) gebildet wird, gleich einem eingeschlossenen Winkel ist, der durch die zwei Montagekanten (321, 322) des dreieckigen Verbindungsstücks gebildet wird.

4. Automatische Maschinensichtdetektionsvorrichtung nach Anspruch 3, wobei Relais (33) fest an den rechteckigen Rohren (31) montiert sind, jede Lichtquelle (2) einem Relais (33) entspricht, ein Draht (34) zwischen jedem Relais (33) und der entsprechenden Lichtquelle (2) angeordnet ist, ein Ende jedes Drahtes (34) mit einem Verdrahtungsende des entsprechenden Relais (33) fixiert ist und das andere Ende jedes Drahtes (34) mit einem Verdrahtungsende der entsprechenden Lichtquelle (2) fixiert ist; und sich jeder Draht (34) von einem Ausgangsende des entsprechenden Relais (33) erstreckt, sich zunächst in einer Richtung nach außen weg von dem rechteckigen Rohr (31) erstreckt und sich dann in einer Richtung nach innen nahe dem rechteckigen Rohr (31) erstreckt, wodurch eine stabile elektrische Verbindung zwischen den Lichtquellen und den Relais sichergestellt werden kann.

5. Automatische Maschinensichtdetektionsvorrichtung nach Anspruch 4, wobei Signaleingangsdrähte (35) an Eingangsenden der Relais (33) angeordnet sind und jeder Signaleingangsdraht (35) aus dem Eingangsende des entsprechenden Relais (33) herausgeführt wird, sich nach vorne erstreckt und dann nach hinten erstreckt, wobei das Eingangsende des Relais (33) als die Vorderseite herangezogen wird und das Ausgangsende des Relais (33) als die Rückseite herangezogen wird.

6. Automatische Maschinensichtdetektionsvorrichtung nach einem der Ansprüche 1 bis 5, wobei jede Lichtquelle (2) an einer Lichtquellenhalterung (21) angeordnet ist, die Lichtquellenhalterung (21) eine Aufhängelasche (211) und ein Aufhängestück (212) umfasst, die Aufhängelasche (211) an der Detektionseinheitshalterung (3) fixiert ist, die Lichtquelle (2) an dem Aufhängestück (212) fixiert ist, das Aufhängestück (212) parallel zu der Lichtquellenhalterung (21) ist, das Aufhängestück (212) drehbar mit der Aufhängelasche (211) verbunden ist; und eine Dämpfung zwischen dem Aufhängestück (212) und der Aufhängelasche (211) vorhanden ist.

7. Automatische Maschinensichtdetektionsvorrichtung nach Anspruch 6, wobei der Drehbereich zwischen dem Aufhängestück (212) und der Aufhängelasche (211) ±10° beträgt.

8. Automatische Maschinensichtdetektionsvorrichtung nach Anspruch 7, wobei die Aufhängelasche (211) mit einem Laschenteil versehen ist, das sich in eine Richtung weit weg von der Detektionseinheitshalterung (3) erstreckt, das Aufhängestück (212) mit einem Träger und einem Verbindungsteil versehen ist, das sich in eine Richtung nahe der Detektionseinheitshalterung erstreckt, die Lichtquelle (2) an dem Träger fixiert ist; das Verbindungsteil sich mit dem Laschenteil überlappt, eine Lichtquellen-Drehwelle (213) zwischen dem Verbindungsteil und dem entsprechenden Laschenteil angeordnet ist und die Lichtquellen-Drehwelle (213) mit dem Verbindungsteil fixiert oder mit dem Laschenteil fixiert ist.

9. Automatische Maschinensichtdetektionsvorrichtung nach Anspruch 8, wobei die Lichtquellen-Drehwelle (213) mit dem Verbindungsteil fixiert ist und mit einer Ausgangswelle eines Lichtquellen-Antriebsmotors verbunden ist.

10. Automatische Maschinensichtdetektionsvorrichtung nach einem der Ansprüche 1 bis 9, wobei die Kamera (1) als ein Mittelpunkt herangezogen wird, jede Ebene, die senkrecht zu der Achse der Kamera ist, als eine Referenzebene herangezogen wird, die Lichtquellen (2) gemäß dem Abstand zwischen den Lichtquellen und der Kamera gruppiert sind, wobei die Lichtquellen (2) in der gleichen Gruppe den gleichen Abstand von der Kamera aufweisen und der Abstand zwischen der Kamera (1) und einer der Lichtquellen (2) in verschiedenen Gruppen zufällig ist.

11. Automatische Maschinensichtdetektionsvorrichtung nach einem der Ansprüche 1 bis 10, wobei die Lichtquellen (2) durch eine Steuerung gesteuert werden, eine Beleuchtungsregel der Lichtquellen in der Steuerung voreingestellt ist, jede Lichtquelle einen eindeutigen Lichtquellencode aufweist und eine Kamera einen eindeutigen Kameracode aufweist; wobei die Beleuchtungsregel eine Entsprechung zwischen den Kameracodes und den Lichtquellencodes und eine Beleuchtungssequenz der Lichtquellen umfasst.

12. Automatisches Sichtdetektionssystem für eine Oberflächenqualität einer Stahlschiene, umfassend die automatische Maschinensichtdetektionsvorrichtung nach einem der Ansprüche 1 bis 11.

13. Automatisches Sichtdetektionssystem für eine Oberflächenqualität einer Stahlschiene nach Anspruch 12, wobei das Stahlschienen-Detektionssystem mit einem Rahmen (4) versehen ist, die automatische Detektionsvorrichtung in dem Rahmen angeordnet ist, der Rahmen (4) mit Seitenplatten und einer oberen Platte versehen ist, die Seitenplatten und die obere Platte das Innere des Rahmens umschließen, um einen dunklen Raum zu bilden, wobei eine Seitenplatte mit einem Einlass versehen ist, um ein Eintreten der Stahlschiene zu erlauben, und eine gegenüberliegende Seitenplatte mit einem Auslass versehen ist, um ein Ausgeben der Stahlschiene zu erlauben; die Seitenplatten mit Türen oder Klappen versehen sind oder die Seitenplatten lösbar mit dem Rahmen verbunden sind.

14. Automatisches Sichtdetektionssystem für eine Oberflächenqualität einer Stahlschiene nach Anspruch 13, wobei es vier Gruppen von Detektionsvorrichtungen (41, 42, 43, 44) gibt, wobei jede Gruppe einem Detektionsbereich der Stahlschiene entspricht, die Detektionsvorrichtungen einen Detektionsbereich umschließen und die Stahlschiene entlang der axialen Richtung in den Detektionsbereich eintritt; und der Abstand zwischen zwei gegenüberliegenden Detektionsvorrichtungen nicht weniger als 1.050 mm beträgt.

**Revendications**

1. Machine automatique de dispositif de détection par vision pour une pièce à surface courbe complexe, ledit dispositif étant doté d'au moins une unité de détection de défauts, l'unité de détection de défauts comprenant une caméra (1), des sources de lumière (2) et un support d'unité de détection (3) ; la caméra (1) et les sources de lumière (2) étant agencées sur le support d'unité de détection (3) ; une caméra (1) et une pluralité de sources de lumière (2) configurées pour la caméra (1) étant utilisées en tant qu'unité de détection, la distance entre une source de lumière et une pièce à inspecter étant cinq fois supérieure à un champ de vision de prise de vue de la caméra (1) ; lorsque la même unité de détection réalise une tâche de prise de vue, les sources de lumière (2) sont configurées pour être éclairées séquentiellement ; lorsqu'une source de lumière (2) est éclairée une fois, la caméra (1) est configurée pour réaliser une fois une prise de vue d'une image de l'objet à inspecter ; chaque fois que la caméra (1) réalise une prise de vue, une seule source de lumière (2) est configurée pour être éclairée ; et les zones d'éclairage les plus fortes des sources de lumière dans la même unité de détection sur l'objet à inspecter ne se chevauchent pas les unes avec les autres ;

la machine automatique de dispositif de détection par vision comprenant en outre un système de traitement de données comprenant un processeur de données, un processeur graphique et une mémoire de données, ledit processeur de données étant configuré pour lire des images à partir de la mémoire de données et entrer les images dans le processeur graphique ;

le système de traitement de données est configuré pour reconstruire des informations de surface tridimensionnelles d'une pièce à inspecter à l'aide d'une pluralité d'images éclairées sous différents angles, **caractérisée en ce que**

un réseau de reconnaissance d'image est prédéfini dans le processeur graphique ; le réseau de reconnaissance d'image comprend une unité d'entrée d'image, un extracteur de caractéristiques pour acquérir des caractéristiques efficaces des images d'entrée, une couche de regroupement maximal et une unité de régression normale ;

ladite unité d'entrée d'image étant configurée pour entrer les images dans un module de fusion initial ;

ledit module de fusion initial étant configuré pour permettre aux images d'être en correspondance biunivoque avec des informations d'éclairage des images ;

ledit module de fusion initial étant configuré pour délivrer en sortie des images fusionnées avec les informations d'éclairage à l'extracteur de caractéristiques ;

ledit extracteur de caractéristiques comprenant un extracteur d'informations inter-trames et un extracteur d'informations spatiales ; ledit extracteur d'informations inter-trames et ledit extracteur d'informations spatiales étant configurés pour utiliser un noyau de convolution tridimensionnel, lesdites informations inter-trames occupant une dimension, et lesdites informations spatiales occupant deux dimensions ;

une sortie du module de fusion initial étant une entrée de l'extracteur d'informations inter-trames, et une sortie de l'extracteur d'informations inter-trames étant une entrée de l'extracteur d'informations spatiales ; et une sortie de l'extracteur d'informations spatiales étant une entrée de la couche de regroupement maximal ;

ladite unité de régression normale étant configurée pour réaliser une opération de convolution sur une sortie de la couche de regroupement maximal, et ensuite pour réaliser une régularisation L2, ledit résultat de la régularisation étant une carte normale, et ladite carte normale formée par les vecteurs normaux de tous les pixels représentant les informations de surface tridimensionnelles de la pièce à inspecter.

2.  Machine automatique de dispositif de détection par vision selon la revendication 1, ledit support d'unité de détection (3) étant circulaire, et ledit centre de cercle du support d'unité de détection (3) étant positionné dans une zone de montage de la caméra (1) ; ladite surface du support d'unité de détection étant considérée comme surface de référence, et sur le plan de référence, chaque source de lumière dans un groupe de sources de lumière (2) comportant une distance de projection identique par rapport à la caméra (1).

3.  Machine automatique de dispositif de détection par vision selon la revendication 1, ledit support d'unité de détection (3) étant polygonal, et ledit support d'unité de détection étant formé en assemblant des tuyaux rectangulaires (31) et une pièce de raccordement triangulaire (32) à travers des éléments de fixation, et lesdits tuyaux rectangulaires (31) formant un cadre du support d'unité de détection (3) ; ladite pièce de raccordement triangulaire (32) étant agencée entre les parties de raccordement des deux tuyaux rectangulaires (31), un bord de montage (321) de la pièce de raccordement triangulaire étant en contact avec un raccord de tuyau rectangulaire (31) et étant fixé par l'élément de fixation, et ledit second bord de montage (322) de la pièce de raccordement triangulaire étant en contact avec l'autre raccord de tuyau rectangulaire (31) et étant fixé par l'élément de fixation, et un angle inclus formé après que les deux tuyaux rectangulaires (31) sont raccordés étant égal à un angle inclus formé par les deux bords de montage (321, 322) de la pièce de liaison triangulaire.

4.  Machine automatique de dispositif de détection par vision selon la revendication 3, des relais (33) étant montés fixement sur les tuyaux rectangulaires (31), chaque source de lumière (2) correspondant à un relais (33), un fil métallique (34) étant agencé entre chaque relais (33) et la source de lumière correspondante (2), une extrémité de chaque fil métallique (34) étant fixée avec une extrémité de câblage du relais correspondant (33), et ladite autre extrémité de chaque fil métallique (34) étant fixée avec un extrémité de câblage de la source de lumière correspondante (2) ; et chaque fil métallique (34) s'étendant à partir d'une extrémité de sortie du relais correspondant (33), s'étendant d'abord dans une direction externe à l'opposé du tuyau rectangulaire (31), et ensuite s'étendant dans une direction interne proche du tuyau rectangulaire (31), ainsi, un raccordement électrique stable entre les sources de lumière et les relais peut être garantie.

5.  Machine automatique de dispositif de détection par vision selon la revendication 4, des fils métalliques d'entrée de signal (35) étant agencés au niveau des extrémités d'entrée des relais (33), chaque fil métallique d'entrée de signal (35) sortant de l'extrémité d'entrée du relais correspondant (33), s'étendant vers l'avant et ensuite s'étendant vers l'arrière ; ladite extrémité d'entrée du relais (33) étant considérée comme l'avant, et ladite extrémité de sortie du relais (33) étant considérée comme l'arrière.

6. Machine automatique de dispositif de détection par vision selon l'une quelconque des revendications 1 à 5, chaque source de lumière (2) étant agencée sur un support de source de lumière (21), ledit support de source de lumière (21) comprenant une oreille de suspension (211) et un pièce de suspension (212), ladite oreille de suspension (211) étant fixée au support d'unité de détection (3), ladite source de lumière (2) étant fixée sur la pièce de suspension (212), ladite pièce de suspension (212) étant parallèle au support de source de lumière (21), ladite pièce de suspension (212) étant raccordée de manière rotative à l'oreille de suspension (211) ; et un amortissement existe entre la pièce de suspension (212) et l'oreille de suspension (211).

7. Machine automatique de dispositif de détection par vision selon la revendication 6, ladite plage de rotation entre la pièce de suspension (212) et l'oreille de suspension (211) étant de ±10°.

8. Machine automatique de dispositif de détection par vision selon la revendication 7, ladite oreille de suspension (211) étant dotée d'une partie d'oreille s'étendant vers une direction s'éloignant du support d'unité de détection (3), ladite pièce de suspension (212) étant dotée d'une poutre et d'une partie de raccordement s'étendant vers une direction proche du support d'unité de détection, ladite source de lumière (2) étant fixée sur la poutre ; ladite partie de raccordement chevauchant la partie d'oreille, un arbre rotatif (213) de source de lumière étant agencé entre la partie de raccordement et la partie d'oreille correspondante, et l'arbre rotatif (213) de source de lumière étant fixé à la partie de raccordement ou étant fixé à la partie de d'oreille.

9. Machine automatique de dispositif de détection par vision selon la revendication 8, ledit arbre rotatif (213) de source de lumière étant fixé à la partie de raccordement et étant raccordé à un arbre de sortie d'un moteur d'entraînement de source de lumière.

10. Machine automatique de dispositif de détection par vision selon l'une quelconque des revendications 1 à 9, ladite caméra (1) étant considérée comme centre, tout plan perpendiculaire à l'axe de la caméra étant considéré comme plan de référence, lesdites sources de lumière (2) étant regroupées selon la distance entre les sources de lumière et la caméra, lesdites sources de lumière (2) dans le même groupe comportant la même distance par rapport à la caméra, et ladite distance entre la caméra (1) et l'une des sources de lumière (2) dans différents groupes étant aléatoire.

11. Machine automatique de dispositif de détection par vision selon l'une quelconque des revendications 1 à 10, lesdites sources de lumière (2) étant commandées par un dispositif de commande, une règle d'éclairage des sources de lumière étant prédéfinie dans le dispositif de commande, chaque source de lumière comportant un code source de lumière unique, et une caméra comportant un code de caméra unique ; ladite règle d'éclairage comprenant une correspondance entre les codes de caméra et les codes de source de lumière et une séquence d'éclairage des sources de lumières.

12. Système de détection par vision automatique pour la qualité de surface d'un rail en acier comprenant la machine automatique de dispositif de détection par vision selon l'une quelconque des revendications 1 à 11.

13. Système de détection par vision automatique pour la qualité de surface d'un rail en acier selon la revendication 12, ledit système de détection de rail en acier étant doté d'un cadre (4), le dispositif de détection automatique étant agencé dans le cadre, ledit cadre (4) étant doté de plaques latérales et d'une plaque supérieure, lesdites plaques latérales et ladite plaque supérieure enfermant l'intérieur du cadre pour former une chambre sombre, une plaque latérale étant dotée d'une entrée pour permettre au rail en acier d'entrer, et une plaque latérale opposée étant dotée d'une sortie pour permettre au rail en acier de sortir ; lesdites plaques latérales étant dotées de portes ou de lits, ou lesdites plaques latérales étant raccordées de manière amovible au cadre.

14. Système de détection par vision automatique pour la qualité de surface d'un rail en acier selon la revendication 13, quatre groupes de dispositifs de détection (41, 42, 43, 44) étant présents, chaque groupe correspondant à une zone de détection du rail en acier, lesdits dispositifs de détection enfermant une zone de détection, et ledit rail en acier entrant dans la zone de détection le long de la direction axiale ; et ladite distance entre deux dispositifs de détection opposés n'étant pas inférieure à 1050 mm.

FIG.1

FIG.2

FIG.3

FIG.4

FIG.5

FIG.6

FIG.7

FIG.8

FIG.9

FIG.10

FIG.11

FIG.12

FIG.13

**EP 4 016 058 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006128317 A1
- CN 104778749 A
- CN 111122598 A